(19) Europäisches Patentamt
European Patent Office
Office européen des brevets

(11) **EP 4 654 102 A1**

(12) **EUROPEAN PATENT APPLICATION**

(43) Date of publication:
26.11.2025 Bulletin 2025/48

(21) Application number: 25163635.3

(22) Date of filing: 13.03.2025

(51) International Patent Classification (IPC):
*G06Q 10/0631* (2023.01)   *G06Q 10/20* (2023.01)
*G06Q 50/08* (2012.01)

(52) Cooperative Patent Classification (CPC):
G06Q 10/20; G06Q 10/0631; G06Q 50/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.05.2024 JP 2024084325

(71) Applicant: Hitachi, Ltd.
Tokyo 100-8280 (JP)

(72) Inventors:
• SATO, Eriko
Tokyo 100-8280 (JP)
• MATSUMOTO, Kohsei
Tokyo 100-8280 (JP)

(74) Representative: Mewburn Ellis LLP
Aurora Building
Counterslip
Bristol BS1 6BX (GB)

(54) **INFORMATION PRESENTATION DEVICE AND METHOD**

(57) Provided is an information presentation device that calculates, for each of other related-persons, a relationship strength between the user and the corresponding related-person at a point or a range in which the user performed an operation in the virtual space in the past, based on history information of communication performed between the user and the other related-persons, calculates, for each of the contents which are registered in association with each of the points in the virtual space, a relevance between the corresponding content and the user, based on the calculated relationship strength, and acquires, based on the calculated relevance for each of the contents, a top predetermined number or a top predetermined proportion of the contents having the high relevance, and selectively presents the acquired contents to the user in the virtual space.

*FIG. 1*

**Description**

BACKGROUND OF THE INVENTION

1. Field of the Invention

The present invention relates to an information presentation device and a method, and is suitably applied to, for example, an information extraction device that presents information to a user in a virtual space.

2. Description of Related Art

In recent years, metaverse spaces achieved in various forms such as virtual reality (VR), augmented reality (AR), and mixed reality (MR) have been used in games, entertainment, and corporate activities.

Here, the term "metaverse space" refers to space information that allows movement in a two-dimensional or three-dimensional space. The same applies to the following description. In such a metaverse space, a user can communicate with other users and can acquire content associated with each point in the metaverse space.

Patent Literature 1 discloses a technique in which a feature of a content of interest to which a user pays attention is identified based on a feature of a main content that a user has visited by searching a virtual space, and a sub-content different in type from the main content is selected as a related content using the feature as a selection criterion.

Citation List

Patent Literature

Patent Literature 1: JP2008-52665A

SUMMARY OF THE INVENTION

Incidentally, in the metaverse space reflecting the information on a real space, there are a large number of pieces of information associated with respective points in the metaverse space by a plurality of users who use the same space, and related-persons change for each point in the metaverse space.

Therefore, when all the information associated with each point in the metaverse space is presented to the user, unnecessary information unrelated to the user is also presented. In such a case, the user needs to select the presented information and extract necessary information, but such an operation is complicated and can lead to important information being overlooked.

The invention has been made in consideration of the above points, and aims to propose an information presentation device and a method that can selectively present information (content) necessary by a user in a metaverse space to a user.

In order to solve the above problem, there is provided an information presentation device that presents contents registered in association with each of points in a virtual space to a user who logs in to the virtual space. The information presentation device includes: a relationship strength calculation unit configured to calculate, for each of other related-persons, a relationship strength between the user and the corresponding related-person at a point or a range in which the user performed an operation in the virtual space in the past, based on history information of communication performed between the user and the other related-persons; a relevance calculation unit configured to calculate, for each of the contents which are registered in association with each of the points in the virtual space, a relevance between the corresponding content and the user, based on the calculated relationship strength; and a content acquisition unit configured to acquire, based on the calculated relevance for each of the contents, a top predetermined number or a top predetermined proportion of the contents having the high relevance, and selectively present the acquired contents to the user in the virtual space.

In addition, according to the invention, there is provided an information presentation method to be performed by an information presentation device that presents contents registered in association with each of points in a virtual space to a user who logs in to the virtual space, the method includes: a first step of calculating, for each of other related-persons, a relationship strength between the user and the corresponding related-person at a point or a range in which the user performed an operation in the virtual space in the past, based on history information of communication performed between the user and the other related-persons; a second step of calculating, for each of the contents which are registered in association with each of the points in the virtual space, a relevance between the corresponding content and the user, based on the calculated relationship strength; and a third step of acquiring, based on the calculated relevance for each of the contents, a top predetermined number or a top predetermined proportion of the contents having the high relevance, and selectively presenting the acquired contents to the user in the virtual space.

According to the invention, information (content) necessary for a user in a metaverse space can be selectively presented to the user.

BRIEF DESCRIPTION OF THE DRAWINGS

FIG. 1 is a block diagram showing an overall configuration of an information presentation system according to the present embodiment;
FIG. 2 is a conceptual diagram illustrating an information presentation function according to the present embodiment;
FIG. 3 is a conceptual diagram illustrating an information presentation function according to the present embodiment;
FIG. 4 is a table showing a configuration example of a login information table;
FIG. 5 is a table showing a configuration example of an operation history table;
FIG. 6 is a table showing a configuration example of an attribute information table;
FIG. 7 is a table showing a configuration example of a communication history table;
FIG. 8 is a table showing a configuration example of a management information table;
FIG. 9 is a block diagram illustrating each program;
FIG. 10 is a conceptual diagram illustrating input information;
FIG. 11 is a diagram showing a screen configuration example of an information presentation screen;
FIG. 12 is a flowchart showing a processing procedure of an operation point related-person calculation process;
FIG. 13 is a table showing a calculation example of a relationship value between related-persons;
FIG. 14 is a diagram showing a calculation example of a related-person network;
FIG. 15 is a table showing a calculation example of a relationship strength;
FIG. 16 is a flowchart showing a processing procedure of a point information assignment process;
FIG. 17 is a flowchart showing a processing procedure of a data relevance calculation process;
FIG. 18 is a table showing a calculation example of a weight for each section in a metaverse space;
FIG. 19 is a table illustrating a data similarity $\gamma$;
FIG. 20 is a table illustrating a calculation method of a data relevance;
FIG. 21 is a flowchart showing a processing procedure of a weight/data similarity $\beta$ calculation process;
FIG. 22 is a table illustrating the weight/data similarity $\beta$ calculation process;
FIG. 23 is a table showing a calculation example of the data similarity $\beta$;
FIG. 24 is a flowchart showing a processing procedure of a data acquisition process; and
FIG. 25 is a table illustrating the data acquisition process.

DESCRIPTION OF EMBODIMENTS

Hereinafter, an embodiment of the invention will be described in detail with reference to the drawings.

(1) Configuration of Information Presentation System According to Present Embodiment

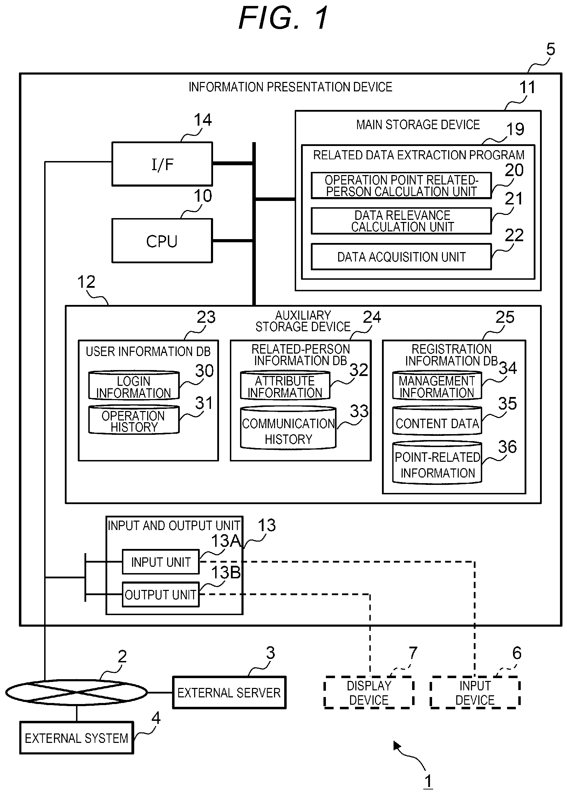

In FIG. 1, reference numeral 1 denotes an information presentation system according to the present embodiment as a whole. The information presentation system 1 includes an information presentation device 5 connected to an external server 3 and an external system 4 via a network 2.

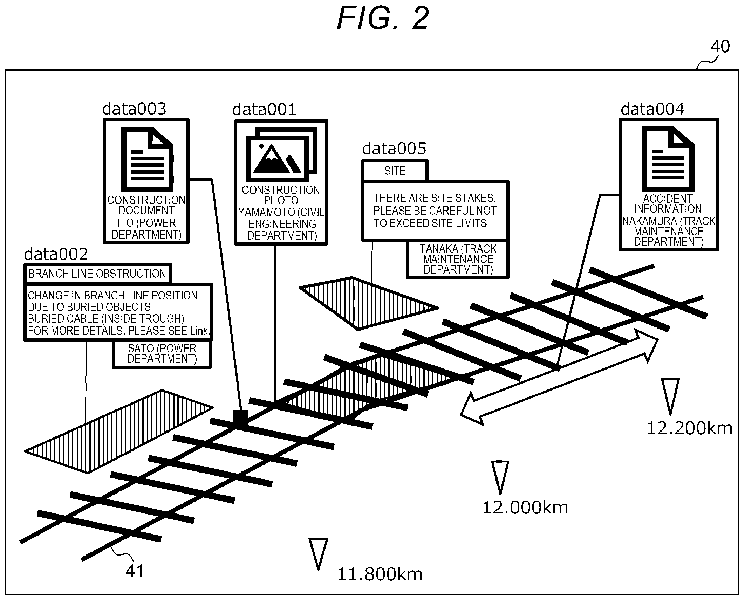

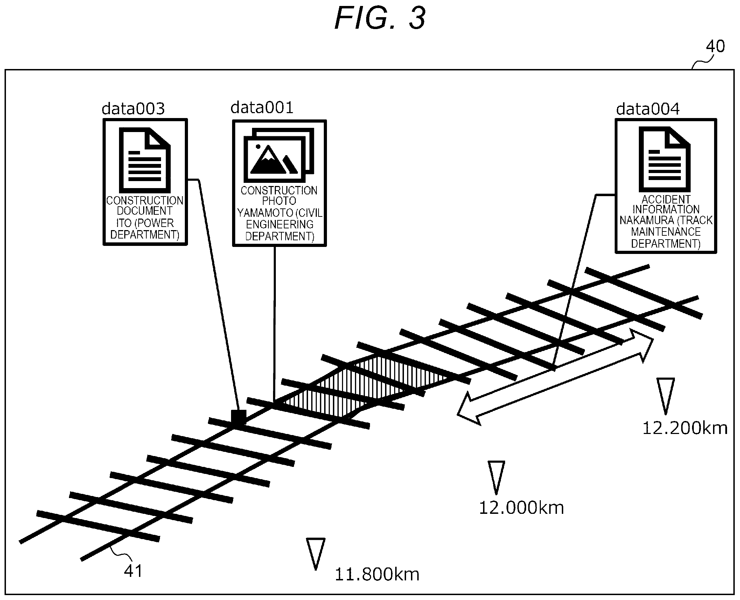

The external server 2 and the external system 4 are server devices or systems that supply, to the information presentation device 5, space information constituting a metaverse space 40 (FIGS. 2 and 3) to be described later, information indicating each railway facility provided along a railway line 41 (FIGS. 2 and 3) to be described later in the metaverse space 40 and its distance in kilometers from a reference position, and the like.

The information presentation device 5 includes a general-purpose computer device including a central processing unit (CPU) 10, a main storage device 11, an auxiliary storage device 12, an input and output unit 13, and an interface 14.

The CPU 10 is a processor that controls an overall operation of the information presentation device 5. The main storage device 11 includes, for example, a nonvolatile semiconductor memory, and is used to temporarily store various programs and various types of data necessary for processing. An operation point related-person calculation unit 20, a data relevance calculation unit 21, and a data acquisition unit 22, which are a part of a related data extraction program 19 to be described later, are also read from the auxiliary storage device 12 to be described later and held in the main storage device 11 when the information presentation device 5 is activated or when necessary.

The auxiliary storage device 12 is implemented by, for example, a large-capacity nonvolatile storage device such as a hard disk device or a solid state drive (SSD), and stores various programs and various types of data that need to be stored for a long period of time. A user information database 23, a related-person information database 24, and a registration information database 25, which will be described later, are also stored and held in the auxiliary storage device 12.

The input and output unit 13 includes an input unit 13A and an output unit 13B. The input unit 13A includes an interface device that receives an input from an input device 6, such as a keyboard or a mouse. The output unit 13B includes a graphic board that displays necessary information on a display device 7 such as a liquid crystal display, an organic electro-luminescence (EL), or a VR device such as VR goggles.

The interface 14 includes, for example, a network interface card (NIC), and performs protocol control when communicating with the external server 3 or the external system 4 via the network 2.

(2) Information Presentation Function According to Present Embodiment

Next, an information presentation function installed in the information presentation device 5 according to the present embodiment will be described. The information presentation function is a function of selectively extracting only a necessary content related to a user (hereinafter, referred to as a target login user) who logs in the metaverse space 40 at that time, as shown in FIG. 3, from among a plurality of pieces of information (hereinafter, referred to as contents) associated with each point by a related-person along a railway line 41 in the metaverse space 40, as shown in FIG. 2, for example, for a related-person of a project such as maintenance of a railway line having a long section, and presenting the content to the target login user.

In practice, persons in charge of maintenance construction such as railway stations and railroad lines, in particular, a construction designer, a construction supervisor, a maintenance supervisor, and the like are usually in charge of a plurality of railroad lines and a long section. In such maintenance construction, there are a plurality of related-persons in each area, and the related-persons are different for each project.

Therefore, if a large amount of contents associated with each point is presented to the target login user along the railway line 41 in the metaverse space 40 by these related-persons, it is complicated for the target login user to extract the content required at that time from the presented contents, and there is also a risk of overlooking important information.

Therefore, based on the information presentation function according to the present embodiment, the information presentation device 5 extracts and presents information considered to be necessary at that time to the target login user by using position information of a position (hereinafter, referred to as a login position) where the target login user logs in, a history of communication with other related-persons related to the login position, and attribute information of a related-person (registrant) who registers registration information having position information associated with each point in the metaverse space and a user (related-person) of the registration information. Hereinafter, the term "position" and the term "point" are used in the same meaning.

As methods for achieving the information presentation function according to the present embodiment, the auxiliary storage device 12 of the information presentation device 5 stores the user information database 23, the related-person information database 24, and the registration information database 25, and the main storage device 11 stores the related data extraction program 19.

The user information database 23 includes a login information table 30 and an operation history table 31.

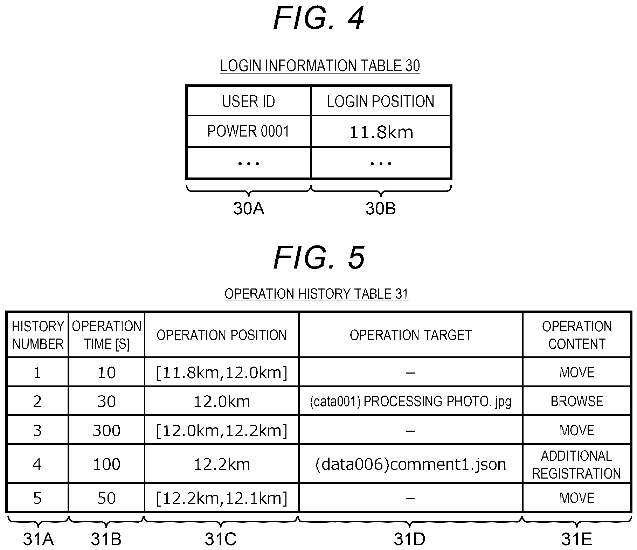

The login information table 30 is a table for managing login information to be input when the user logs in to the metaverse space 40 (FIGS. 2 and 3). As shown in FIG. 4, the login information table 30 includes a related-person ID field 30A and a login position field 30B. In the login information table 30, one row corresponds to login information of one target login user who logs in to the metaverse space 40 at that time.

Further, the related-person ID field 30A stores an identifier (related-person ID) unique to the corresponding target login user and assigned to the target login user, and the login position field 30B stores a position (distance in kilometer from a reference position) along the railway line 41 (FIGS. 2 and 3) where the target login user logs in at that time. Therefore, in the example of FIG. 4, it is shown that the login information registered indicates that a user with a related-person ID of "power 0001" logs in to a point of "11.8 km" from the reference position.

The operation history table 31 is a table to be used to store and hold, as an operation history, an operation content performed by the user in the metaverse space 40 after the user logs in to the metaverse space 40 as described above. The operation history table 31 is created for each user by collecting necessary data by the related data extraction program 19.

As shown in FIG. 5, the operation history table 31 includes a history number field 31A, an operation time field 31B, an operation position field 31C, an operation target field 31D, and an operation content field 31E. In FIG. 5, one row corresponds to information on an operation history of one operation performed by the corresponding target login user (hereinafter, referred to as operation history information).

The history number field 31A stores a number (history number) unique to the operation history information assigned to the corresponding operation history information on the operation history table 31. FIG. 5 shows an example in which a serial number starting from 1 is applied as the history number.

The operation content field 31E stores specific details (operation content) of an operation performed by the corresponding target login user corresponding to the operation history information. Such operation contents include "move" for moving in the metaverse space 40, "browse" for browsing information associated with any point on the railway line 41 in the metaverse space 40, and "additional registration" for registering a file in association with any point in the metaverse space 40.

Further, an operation time field 31B stores a period (seconds) during which the target login user performs a corresponding operation in the metaverse space 40, and an operation position field 31C stores a position (distance in kilometer from the reference position) at which the operation is performed in the metaverse space 40. When the operation content of the operation is "move", a start position and an end position of the movement are stored in the operation position field 31C.

Further, the operation target field 31D stores an operation target. In this case, when the operation content is "browse", the browsed content corresponds to the operation target, and when the operation content is "additional registration", the additionally registered content corresponds to the operation target. When the operation content is "move", since there is no operation target, the operation target field 31D is blank.

Therefore, it is indicated that the operation history information to which a history number "1" is assigned is information of an operation history in which the corresponding target login user "moves" over a section from "11.8 km" to "12.0 km" in the metaverse space 40 over "10 (seconds)."

Meanwhile, as shown in FIG. 1, the related-person information database 24 includes an attribute information table 32 and a communication history table 33.

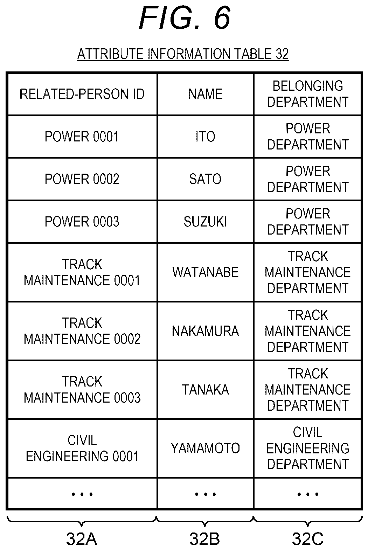

The attribute information table 32 is a table for managing attribute information on each related-person registered in the information presentation device 5, and includes a related-person ID field 32A, a name field 32B, and a belonging department field 32C, as shown in FIG. 6. In the attribute information table 32, one row corresponds to the attribute information on one related-person registered in the information presentation device 5.

Further, the related-person ID field 32A stores an identifier (related-person ID) of the corresponding related-person. The name field 32B stores a name of the related-person, and the belonging department field 32C stores a belonging department of the related-person. Therefore, in the case of the example of FIG. 6, it is indicated that the name of the related-person to which the related-person ID of "power 0001" is assigned is "Ito" and the belonging department of the related-person is "power department".

In addition, the communication history table 33 is a table for managing information collected by the related data extraction program 19 related to communication performed by the related-person with another related-person in the metaverse space 40, and communication performed by the related-person with another related-person by e-mail or chat in the real world.

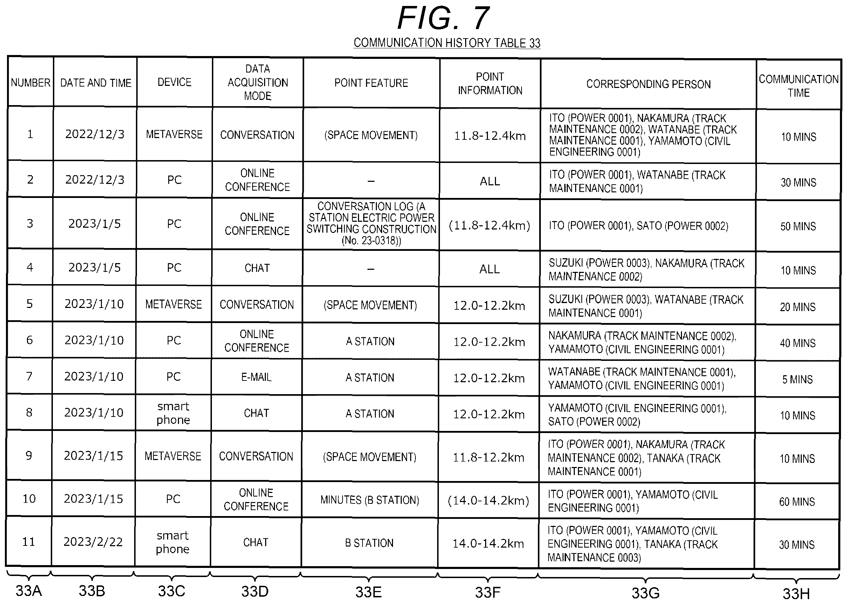

As shown in FIG. 7, the communication history table 33 includes a number field 33A, a date and time field 33B, a device field 33C, a data acquisition mode field 33D, a point feature field 33E, a point information field 33F, a corresponding person field 33G, and a communication time field 33H. In the communication history table 33, one row corresponds to history information (hereinafter, referred to as communication history information) of one communication performed between the corresponding related-person and another related-person in the past.

Further, in the number field 33A, an identification number (communication history number) unique to the corresponding communication history information, which is assigned to the communication history information in the communication history table 33, is assigned. FIG. 7 shows an example in which consecutive numbers starting from 1 are applied as the communication history numbers.

The date and time field 33B stores a date and time when the corresponding communication is performed, and the device field 33C stores a device with which the communication is performed. Examples of such a device include a "metaverse" in a case in which the communication is performed in the metaverse space 40, a "PC" in a case in which the communication is performed in an online conference, a chat, an e-mail, or the like using a personal computer, a "smart phone" in which the communication is performed in a chat, an e-mail, or the like using a smartphone, and the like.

Further, the data acquisition mode field 33D stores a mode of communication in which the information presentation device 5 acquires corresponding communication data as described later. Such modes include "conversation" such as chat performed in the metaverse space 40, "online conference" performed using a personal computer, and "chat" and "e-mail" performed using a personal computer or a smartphone.

The point feature field 33E stores information (hereinafter, referred to as a point feature) for identifying a point or an object in the metaverse space 40, such as railway facility, construction, or minutes, which is a subject of the communication. The point feature is extracted by the operation point related-person calculation unit 20, which will be described later, from a text of a chat or e-mail as described later, or is identified by the operation point related-person calculation unit 20 from a conversation content recognized by a voice recognition process for voice conversation between related-persons.

A point information field 33F stores information indicating a specific point (distance in kilometer, range, or the like from the reference position) of a railway facility or the like that is a subject of the corresponding communication. For example, when such communication is performed by conversation while moving in the metaverse space 40, a movement range at that time is stored in the point information field 33F as the point information. In this case, information "(space movement)" is stored in the point feature field 33E. In addition, in a case in which the details of the communication relate to the entire railway facility and are not intended for a specific railway facility or the like, information "ALL" indicating the entire railway facility is stored in the point information field 33F. In this case, no information is stored in the point feature field 33E.

Further, the corresponding person field 33G stores the names and the related-person ID of all the related-persons who perform the corresponding communication, and the communication time field 33H stores a time during which the communication is performed. For example, when the communication is performed in a conversation, a time of the conversation is stored in the communication time field 33H, and when the communication is performed in an online conference, a time required for the online conference is stored in the communication time field 33H.

Therefore, in the case of the example of FIG. 7, for example, it is shown that on "2022/12/3", four people, "Ito (power 0001)", "Nakamura (track maintenance 0002)", "Watanabe (track maintenance 0001)", and "Yamamoto (civil engineering 0001)", "move (space movement)" between points "11.8-12.4 km" within the "metaverse" space 40 and communicate through "conversation" for only "10 minutes".

As shown in FIG. 1, the registration information database 25 includes a management information table 34, a content data table 35, and a point-related information table 36.

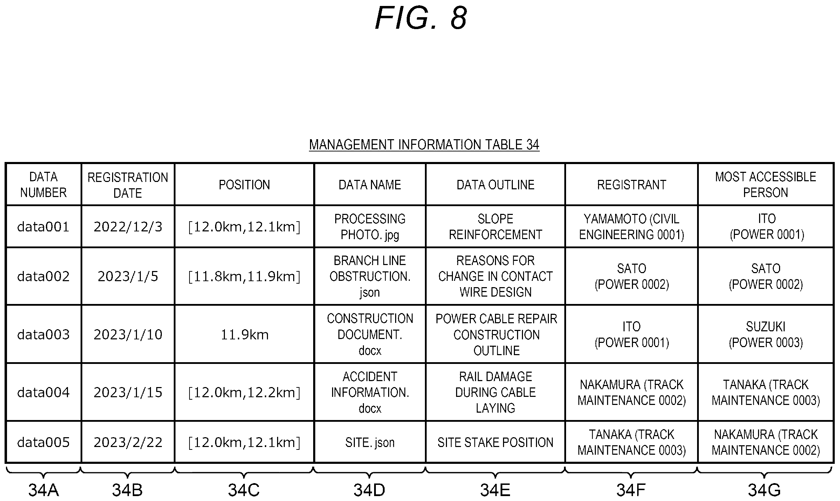

The management information table 34 is a table for managing each content registered to be associated with each point by a related-person in the metaverse space 40 described above. As shown in FIG. 8, the management information table 34 includes a data number field 34A, a registration date field 34B, a position field 34C, a data name field 34D, a data outline field 34E, a registrant field 34F, and a most accessible person field 34G. In the management information table 34, one row corresponds to data of one content (hereinafter, referred to as content data) registered in association with any position in the metaverse space 40.

The data number field 34A stores a number (data number) unique to the content data assigned to the corresponding content data, and the registration date field 34B stores a date when the content data is registered in association with any position in the metaverse space 40.

A position field 34C stores a position or a range (a range of a distance in kilometer or a range of a distance in kilometer from the reference position) in the metaverse space 40 with which content data is associated. A position or a range stored in the position field 34C is a position or a range associated with the content data by the related-person in the metaverse space 40, which is automatically acquired and stored by the information presentation device 5, and global positioning system (GPS) information of the position or range acquired by the related-person in the real space may be stored in the position field 34C.

The data name field 34D stores a data name of the corresponding content data (a file name when the content is a file), and the data outline field 34E stores an outline of the content data. In the example of FIG. 8, only a data outline of a short sentence is stored in the data outline field 34E of each record, but in practice, a data outline of a longer sentence is stored.

Further, the registrant field 34F stores a name and a related-person ID of a related-person (hereinafter, also referred to as a registrant) who registers the content of the content data in association with the position in the metaverse space 40, and the most accessible person field 34G stores a name and a related-person ID of a related-person (hereinafter, referred to as a most accessible person) who accesses the content data (content) most frequently.

Therefore, in the case of the example of FIG. 8, the content data to which the data number of "data001" is assigned is data that is registered by "Yamamoto (civil engineering department 0001)" on "2022/12/3" in association with a position (range) "[12.0 km, 12.1 km]" in the metaverse space 40, and the data name is "construction photo.jpg", the data outline is "slope reinforcement", and the most accessible person is "Ito (Power 0001)".

The content data table 35 (FIG. 1) is a table in which content data of all contents associated with any point or range in the metaverse space 40 is stored in association with the content name. As shown in the data name field 34D of FIG. 8, the content data includes text data, text file data, and photo file data.

The point-related information table 36 (FIG. 1) is a table in which the space information of the metaverse space 40 provided from the external server 3 or the external system 4 as described above, and information indicating each railway facility provided along the railway line 41 in the metaverse space 40 (FIGS. 2 and 3) and the distance in kilometer from the reference position are stored.

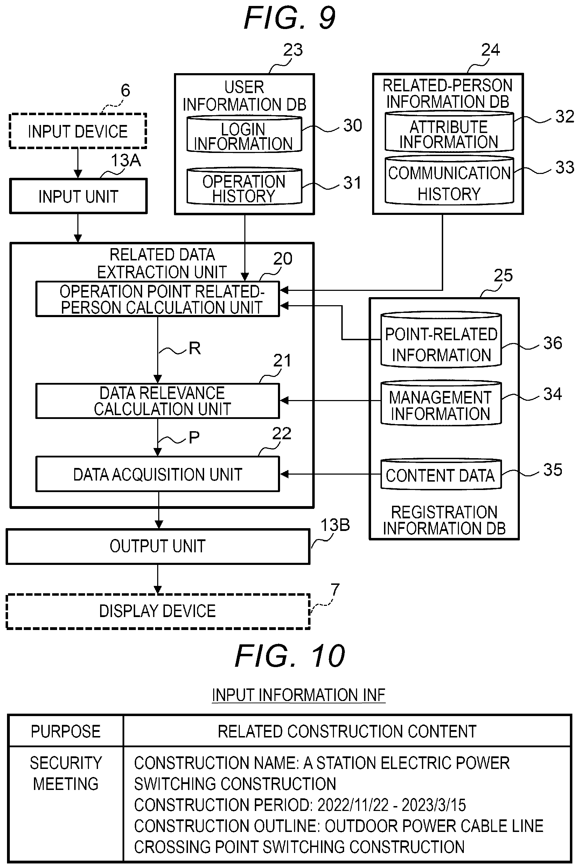

Meanwhile, as shown in FIG. 9, the operation point related-person calculation unit 20 (FIG. 1) is a program having a function of calculating a degree of strength (hereinafter, referred to as a relationship strength) of a relationship with other related-persons at a point (hereinafter, referred to as an operation point) where the target login user performs an operation in the metaverse space 40 based on login information 30 of the target login user, history information of communication of the target login user with other related-persons stored in an operation history table 31, and information on an operation history of the target login user in the metaverse space 40 so far stored in the communication history table 33.

In practice, as shown in FIG. 10, information (for example, a construction number, a construction name, a construction period, and a construction outline) on a project that is a current target input when the target login user logs in to the metaverse space 40 is given to the operation point related-person calculation unit 20 as the input information INF via the input unit 13A of the input and output unit 13 (FIG. 1). The input information INF may be registered in advance by a related-person in association with other information such as a construction number, rather than being registered at the time of login of the target login user.

The input information INF is an extraction condition for extracting a content to be presented to the target login user in the metaverse space 40 as described later. Input information INF is not limited to a text, and may be a numerical value indicating a distance in kilometer from a reference position or a data display period.

Further, the operation point related-person calculation unit 20 calculates a relationship strength R between the target login user and other related-persons for each of these related-persons based on the input information INF, communication history information related to the communication history between the target login user and other related-persons, and attributes of other related-persons who communicate with the target login user, and outputs a calculation result to the data relevance calculation unit 21.

The operation point related-person calculation unit 20 also has a function of generation artificial intelligence (AI), generates an answer to a question from the target login user with reference to the content data table 35 (FIG. 1) and the point-related information table 36 (FIG. 1), and presents the generated answer to the target login user.

The data relevance calculation unit 21 is a program having a function of calculating, for each content registered in association with each point in the metaverse space 40, a degree of strength of relevance (hereinafter, referred to as a data relevance P) between the content and a target login user who is a target at that time (hereinafter, referred to as a target login user).

In practice, the data relevance calculation unit 21 calculates the data relevance P between the target login user and each content based on the relationship strength R between the target login user and other related-persons calculated by the operation point related-person calculation unit 20, the management information of each content associated with each point in the metaverse space 40 stored in the management information table 34 (FIG. 8), and the input information INF input when the target login user logs in to the metaverse space 40. Further, the data relevance calculation unit 21 outputs, to the data acquisition unit 22, the calculated data relevance P between the target login user and each content.

Further, the data acquisition unit 22 is a program having a function of selecting one or a plurality of contents to be displayed in the metaverse space 40 at that time based on the data relevance P between the target login user and each content given from the data relevance calculation unit 21, and acquiring the content data of the contents from the content data table 35 (FIG. 1).

The data acquisition unit 22 outputs the acquired content data and the space information of the metaverse space 40 to the display device 7 (FIG. 1) via the output unit 13B. Accordingly, the space information in which each content selected by the data acquisition unit 22 is displayed at a corresponding position in the metaverse space 40 based on the space information is displayed on the display device 7.

(3) Information Presentation Screen

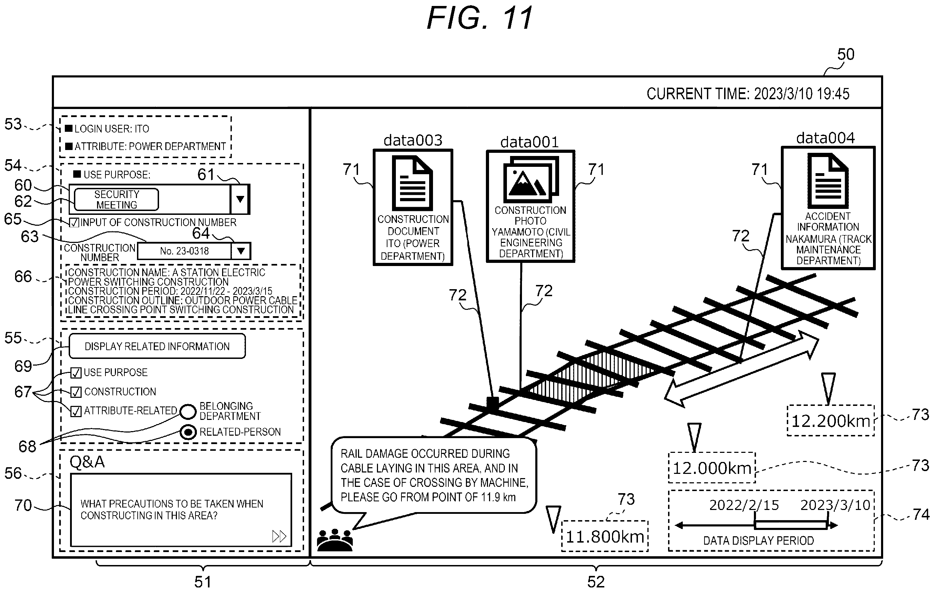

FIG. 11 shows an information presentation screen 50 displayed on the display device 7 based on the space information and the content data output from the data acquisition unit 22 via the output unit. As shown in FIG. 11, the information presentation screen 50 includes an information display field 51 and a metaverse space display field 52.

The information display field 51 includes a user information display region 53, a use purpose setting region 54, a display content identifying region 55, and a Q&A region 56. Further, the user information display region 53 displays a name and an attribute (affiliation) of the target login user detected based on the login information of the target login user who logs in to the metaverse space 40.

The use purpose setting region 54 is a region for the target login user to set a use purpose of the metaverse space 40 this time. In practice, a use purpose display field 60 and a pull-down menu button 61 are provided in the use purpose setting region 54. Then, the target login user can set the use purpose as the current use purpose by selecting a desired use purpose from among various use purposes listed in a pull-down menu (not shown) displayed by clicking the pull-down menu button 61. In this case, a mark 62 indicating the use purpose is displayed in the use purpose field 60.

A construction number display field 63 and a pull-down menu 64 are also provided in the use purpose setting region 54. Then, the target login user clicks a construction number input setting check box 65 to display a check mark in the construction number input setting check box 65, and then clicks the pull-down menu button 64 to display a pull-down menu in which all the construction numbers registered at that time are listed.

The target login user can display the construction number in the construction number display field 63 by selecting the corresponding construction number from the construction numbers listed in the pull-down menu. Here, the "corresponding construction number" is the construction number of the construction identified based on the input information INF (FIG. 10) input when the target login user logs in to the metaverse space 40.

Further, the use purpose setting region 54 displays a character string 66 representing details of the input information INF input when the target login user logs in to the metaverse space 40 below the construction number display field 63.

The display content identifying region 55 is a region for designating the type of content to be displayed in the metaverse space 40. In practice, in the present embodiment, as the type of content to be displayed in the metaverse space 40, it is possible to designate one or all of the following: a content (hereinafter, referred to as use purpose related content) related to the use purpose designated by the target login user in the use purpose display region 54 (use purpose corresponding to the mark displayed in the use purpose display field of the use purpose display region), a content (hereinafter, referred to as designated construction related content) related to construction corresponding to the input information INF input when the target login user logs in to the metaverse space 40 (construction whose construction number is displayed in the construction number display field of the use purpose display region), and a content (hereinafter, referred to as an attribute-related content) registered by a related-person to the attribute related to the attribute of the target login user. As for the attribute-related content, it is possible to further designate any one of content registered by another related-person belonging to the same department as the target login user (hereinafter, referred to as a belonging department registration content) and a content registered by a construction related-person identified in the use purpose display region (hereinafter, referred to as related-person registration content).

In practice, the display content identifying region 55 is provided with check boxes 67 corresponding to the use purpose related content, the designated construction related content, and the attribute-related content, respectively. Then, the target login user clicks the check box 67 corresponding to the desired type of content from among the check boxes 67 to display a check mark in the check box 67, thereby being able to designate the type of the content as the type of the content to be displayed in the metaverse space 40.

For the attribute-related content, radio buttons 68 are displayed in association with the belonging department registration content and the related-person registration content, respectively. Then, the target login user clicks the radio button 68 corresponding to the desired type of content (the belonging department registration content or the related-person registration content) from among the radio buttons 68 to transition the display form of the radio button 68 to the display state at the time of selection, thereby designating the type of content as the type of content to be displayed in the metaverse space 40.

Then, on the information presentation screen 50, after designating the type of content to be displayed in the metaverse space 40 as described above, the related information display button 69 can be clicked to display icons 71 (FIG. 11) described below that are attached to each content of the designated type in the metaverse space 40.

Further, a text box 70 is provided in the Q&A region 56. Then, by operating the input device 7 (FIG. 1), the target login user can input a question in the text box 70 as a sentence. Then, a speech bubble indicating an answer to the question is displayed in the metaverse space display field 52. The answer is generated by the operation point related-person calculation unit 20 using the generated AI function based on the data outline or the like of the content already registered at the point in the metaverse space 40 where the target login user logs in or the surrounding points.

Meanwhile, the metaverse space display field 52 displays space information around a login position designated when the target login user logs in to the metaverse space 40.

The metaverse space display field 52 displays an icon 71 and a line 72 connecting a position or a range in the metaverse space 40 to which the content is associated are displayed in association with the content of the type designated by the target login user in the display content identifying region 55 of the information display field 51 among the contents registered by any related-person in association with a point or a range in the metaverse space 40.

In this case, the icon 71 represents the data name of the content data of the corresponding content and the name and the belonging department of the registrant of the content, and accordingly, the target login user can easily grasp the outline of the content corresponding to each icon 71 based on display information.

Therefore, by referring to the information displayed on each icon 71 and selecting the desired icon 71 by double-clicking or the like, the target login user can superimpose and display, on the information presentation screen 50, the details (photo, text, or the like) of the content corresponding to the icon 71.

Further, in the metaverse space display field 52, a character string 73 indicating the distance in kilometer from the reference position is displayed at regular intervals, and a data display period designation meter 74 is displayed. Then, the target login user can designate a period from when to when the icons 71 of the content registered are to be displayed in the metaverse space display field 52 by performing a predetermined operation on the data display period designation meter 74.

(3) Various Processes Related to Information Presentation Function

Next, specific processing contents of various processes executed in the information presentation device in relation to the information presentation function according to the present embodiment as described above will be described. In the following description, a processing subject of various processes will be described as a program ("...unit"), and it is needless to say that the CPU of the information presentation device actually executes the process based on the program.

(3-1) Operation Point Related-Person Calculation Process

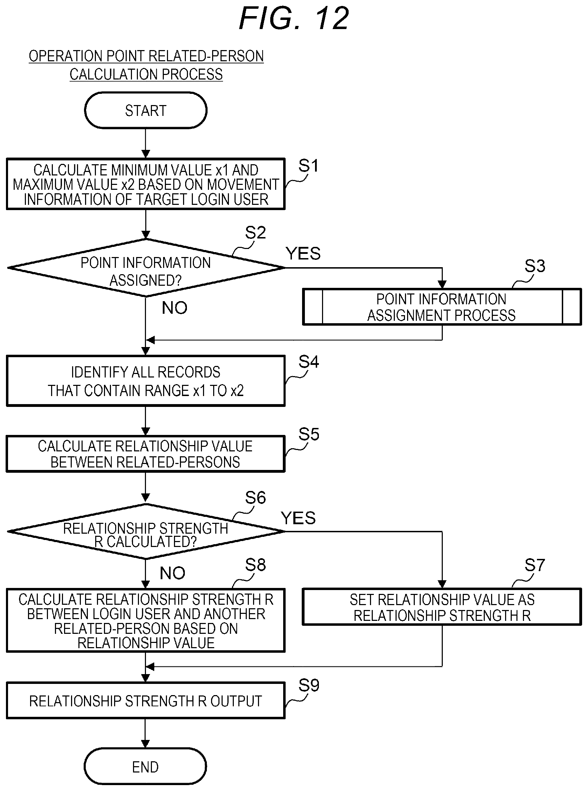

FIG. 12 shows a flow of a process (hereinafter, referred to as an operation point related-person calculation process) of calculating the relationship strength R between the target login user at the operation point and another related-person based on the position information of the login position of the target login user who logs in to the metaverse space 40 and the communication history with another related-person.

The operation point related-person calculation process is executed by the operation point related-person calculation unit 20 when the user logs in to the metaverse space 40 or when the user (target login user) designates the type of content to be displayed at that time in the display content identifying region 55 of the information display field 51 of the information presentation screen 50 described above with reference to FIG. 11 and then clicks the related information display button 69.

In practice, when the user logs in to the metaverse space 40 as described above, the operation point related-person calculation unit 20 starts the operation point related-person calculation process shown in FIG. 12, and first calculates a minimum value x1 and a maximum value x2 of a range in which the user (target login user) moves in the metaverse space 40 so far (S1).

In practice, the operation point related-person calculation unit 20 calculates the minimum value x1 and the maximum value x2 based on the login information of the target login user stored in the login information table 30 (FIG. 4) and the operation history information of various operations performed by the target login user so far stored in the operation history table 31 (FIG. 5).

For example, when the login position of the target login user is "11.8 km" as shown in FIG. 4 and the operation history of the target login user in the metaverse space 40 so far is as shown in FIG. 5, the range of the operation position of the target login user so far is "11.8 km to 12.2 km", which includes "11.8 km" that is the login position of the target login user, and thus the minimum value x1 is calculated as "11.8 km" and the maximum value x2 is calculated as "12.2 km".

At this time, even if the operation position "10.0 to 11.2 km" is included in the operation history, this range does not include the login position "11.8 km" of the target login user, and thus is not used to calculate the minimum value x1 and the maximum value x2.

The minimum value x1 and the maximum value x2 do not need to be the minimum value and the maximum value of the distance in kilometer in the range in which the target login user actually moves in the metaverse space 40, and a value obtained by subtracting a certain margin from the distance in kilometer of the minimum value in the range in which the target login user actually moves in the metaverse space 40 may be the minimum value x1, and a value obtained by adding a certain margin to the distance in kilometer of the maximum value in the range may be the maximum value x2.

Subsequently, the operation point related-person calculation unit 20 determines whether there is a record to which point information is to be assigned in the communication history table 33 (FIG. 7) (S2). In the example of FIG. 7, a record in which a range is stored in parentheses in the point information field 33E corresponds to such a record.

For example, in the example of FIG. 7, a record to which the communication history number "3" is assigned indicates that information of a target of an online conference acquired from a conversation log during the online conference is only the construction name "A station electric power switching construction" and the construction number for the construction "No. 23-0318". Therefore, the point information cannot be acquired at the time of registration of the record, and thus the point information field 33F is blank.

Further, in the example of FIG. 7, also for the record to which the communication history number "10" is assigned, it is indicated that information of a target of an online conference acquired by the voice recognition process during the online conference is only information "minutes" for a "B station", and the point information cannot be acquired at the time of registration of the record, and thus the point information field 33F is blank.

Therefore, when the operation point related-person calculation unit 20 obtains a negative result in step S2, the process proceeds to step S4, whereas when the operation point related-person calculation unit 20 obtains an affirmative result in step S2, for the record, the operation point related-person calculation unit 20 executes a point information assignment process of extracting a distance in kilometer and a range from the reference position of the railway facility or the like that is the target of communication from the point-related information table 36 (FIG. 1) and storing the extracted distance in kilometer and range in the point information field 33F of the record (S3). Specific details of the point information assignment process will be described later.

Next, the operation point related-person calculation unit 20 identifies all records of the communication history table 33 in which the distance in kilometer stored in the point information field 33F of the communication history table 33 or a part or all of the range stored in the point information field 33F includes a range equal to or greater than the minimum value x1 and equal to or less than the maximum value x2 calculated in step S1 (S4).

For example, when the minimum value x1 is calculated as "11.8 km" and the maximum value x2 is calculated as "12.2 km" in step S1 as described above, the operation point related-person calculation unit 20 in the example of FIG. 7 identifies the records of the communication histories of "1" to "9" other than the communication history numbers "10" and "11".

Then, the operation point related-person calculation unit 20 calculates the relationship value between the related-persons stored in the corresponding person field 33G of each identified record (S5). In the present embodiment, the relationship value between the related-persons is calculated as a total value of communication times between these related-persons.

For example, in the case of the above-described example, in the corresponding person field 33G of each record of the communication history having the communication history numbers "1" to "9", any one of seven names of "Ito (power 0001)", "Nakamura (track maintenance 0002)", "Watanabe (track maintenance 0001)", "Yamamoto (civil engineering 0001)", "Sato (power 0002)", "Suzuki (power 0003)", and "Tanaka (track maintenance 0003)" is stored.

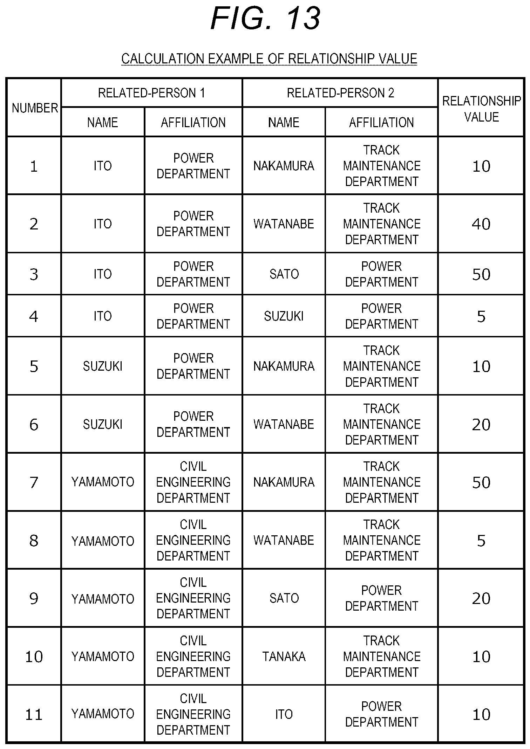

Therefore, based on the communication times stored in the communication time fields 33H of the records of the communication histories with the communication history numbers "1" to "9", the operation point related-person calculation unit 20 calculates the total value of the communication times as the relationship value between the corresponding related-persons for each combination of these related-persons as shown in FIG. 13.

Specifically, in the case of the example of FIG. 7, for example, since only the communication history with the communication history number "1" corresponds to the combination of "Ito (power 0001)" and "Nakamura (track maintenance 0002)", "10" stored in the communication time field 33H of the record with the communication history number "1" is the relationship value between these two persons.

Since the combination of "Ito (power 0001)" and "Watanabe (track maintenance 0001)" corresponds to the communication histories with the communication history numbers "1" and "2", "40", which is the total value of "10" stored in the communication time field 33H of the record with the communication history number "1" and "30" stored in the communication time field 33H of the record with the communication history number "2", is the relationship value between these two persons.

The number of times of communication between users may be set as the relationship value between the related-persons. In addition, the calculation method of the relationship value may be changed, for example, weighting may be performed with a weight according to the communication form such as "PC", "metaverse", and "smart phone" in FIG. 7. Further, for example, in a case in which any one of the related-persons belongs to the "power department", the relationship value may be weighted using the attribute information of the related-person, such as doubling the relationship value.

Subsequently, the operation point related-person calculation unit 20 determines whether to calculate the relationship strength R between the related-persons (S6). Since whether to calculate the relationship strength R between the related-persons is set in advance, the operation point related-person calculation unit 20 determines whether such a setting is made in step S6.

Then, when the operation point related-person calculation unit 20 obtains an affirmative result in the determination, the operation point related-person calculation unit 20 sets the relationship value between the target login user and another related-person among the relationship values between the respective related-persons calculated in step S5 as the relationship strength R between the target login user and another related-person (S7), and then ends the operation point related-person calculation process.

On the other hand, when the operation point related-person calculation unit 20 obtains a negative result in the determination of step S6, the operation point related-person calculation unit 20 calculates the relationship strength R between the related-persons based on the relationship value between the related-persons calculated in step S5 (S8). As a calculation method of the relationship strength R, various methods can be applied. Here, a method for using the related-person network will be described.

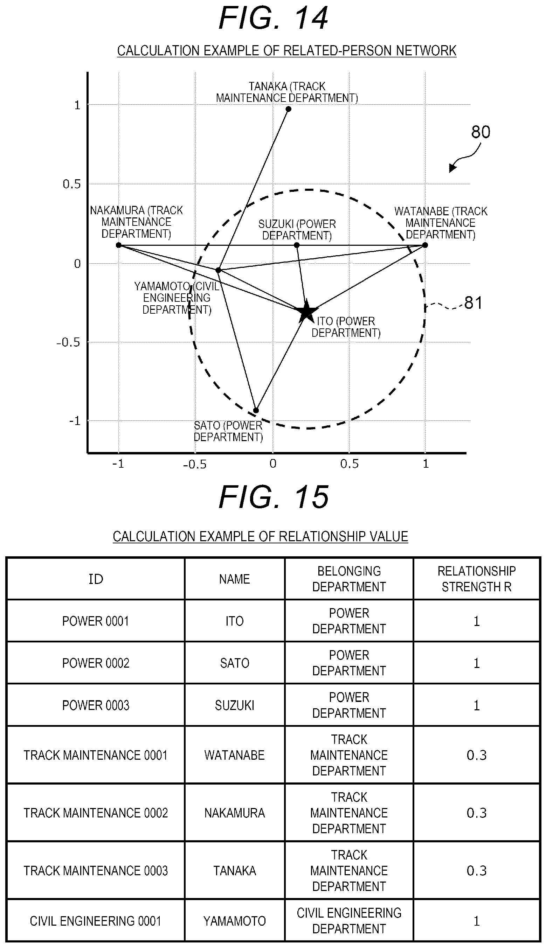

First, as shown in FIG. 14, a related-person network 80 is created in which each related-person including the target login user is set as a node and a relationship value between the related-persons is set as a length of a link connecting the related-persons. The related-person network 80 created at this time may be a unidirectional network instead of a bidirectional network.

Next, in the related-person network 80, one related-person is selected from the above-described related-persons, and as shown in FIG. 15, the relationship strength R is set to "1" for other related-persons present inside a circle 81 having a predetermined size in advance centered on the selected related-person, and the relationship strength R is set to "0.3" for related-persons present outside the circle 81. However, the size of the circle 81 may be dynamically set such that a predetermined ratio (for example, half) of the related-person is divided into the inside and the outside of the circle 81.

FIG. 14 shows an example in which "Ito (power department)" is selected. The process as described above is executed for all the related-persons whose relationship values with other related-persons are calculated in step S5. Accordingly, the relationship strength between the related-persons can be calculated.

Then, the operation point related-person calculation unit 20 outputs, to the data relevance calculation unit 21, the relationship strength R between the target login user and another related-person set in step S7 or the relationship strength R between the related-persons calculated in step S8 (S9), and then ends the operation point related-person calculation process.

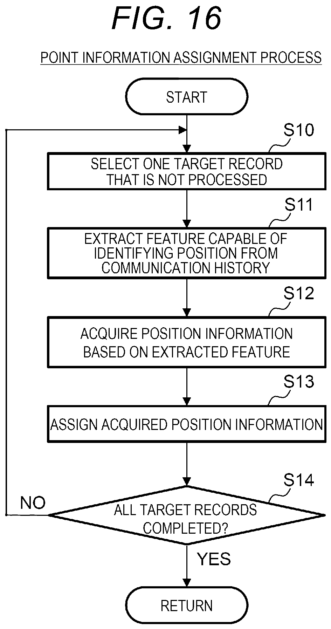

FIG. 16 shows specific processing contents of the point information assignment process executed by the operation point related-person calculation unit 20 in step S3 of the above-described operation point related-person calculation process. When the operation point related-person calculation unit 20 proceeds to step S3 of the operation point related-person calculation process, the operation point related-person calculation unit 20 starts the point information assignment process shown in FIG. 16.

Then, the operation point related-person calculation unit 20 first selects, from the records of the communication history table 33 (FIG. 7), one record (hereinafter, referred to as a target record) for which the point information is not stored in the point information field 33F and that is not processed in step S11 to step S13 (S10).

Subsequently, the operation point related-person calculation unit 20 extracts a feature capable of identifying a position from the information stored in the point feature field 33E of the target record (hereinafter, referred to as a selected record) selected in step S10 (S11).

Here, the "feature capable of identifying a position" refers to a feature word associated with certain position information such as a point name or a construction name indicating a construction position. As the feature word, for example, a method for extracting a feature word by preparing in advance a table storing a name and a position of each railway facility, a project name and a position of each project such as construction, and comparing information stored in the point feature field 33E with information stored in the table, or a method for extracting a feature word from an appearance frequency of a word in a sentence can be applied, and the method is not limited thereto.

In the case of the example of FIG. 7, for example, when the record with the number "3" in the communication history table 33 is the selected record, the operation point related-person calculation unit 20 can extract "A station electric power switching construction", "No. 23-0318", or the like among the information of "A station electric power switching construction (No. 23-0318)" stored in the point feature field 33E as the "feature capable of identifying a position". When the record with the number "10" in the communication history table 33 is the selected record, the operation point related-person calculation unit 20 can extract the information "B station" as the "feature capable of identifying a position".

Next, the operation point related-person calculation unit 20 acquires, based on the "feature capable of identifying a position" extracted in step S11, position information corresponding to the "feature capable of identifying a position" from the point-related information table 36 (FIG. 1) (S12).

For example, when the "feature capable of identifying a position" extracted in step S11 is "A station", the operation point related-person calculation unit 20 acquires the position information of "A station" from the point-related information table 36. When the "feature capable of identifying a position" extracted in step S11 is "B station", the operation point related-person calculation unit 20 acquires position information of "B station" from the point-related information table 36.

Then, the operation point related-person calculation unit 20 stores the position information acquired in step S12 in the position information field 33F of the selected record (S13), and then determines whether the processes of step S10 to step S13 are executed for all the target records (S14).

When a negative result is obtained in the determination, the operation point related-person calculation unit 20 returns to step S10, and then repeats the processes of step S10 to step S14 while sequentially switching the target record selected in step S10 to another target record for which step S11 and subsequent steps are not processed.

When the operation point related-person calculation unit 20 eventually obtains an affirmative result in step S14 by completing storing the point information in the point information fields 33F of all the target records, the operation point related-person calculation unit 20 ends the point information assignment process and returns to the operation point related-person calculation process.

(3-2) Data Relevance Calculation Process

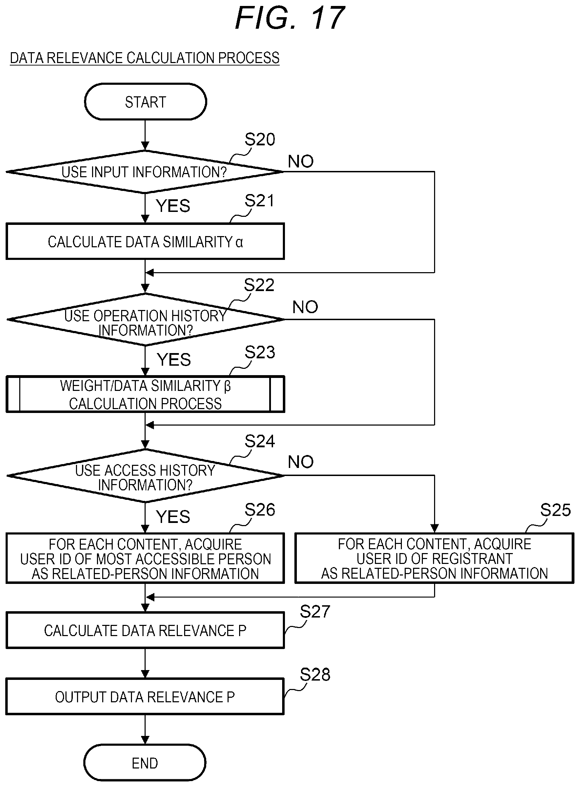

FIG. 17 shows a flow of a series of processes (data relevance calculation process) executed by the data relevance calculation unit 21 (FIG. 1). The data relevance calculation unit 21 calculates the data relevance P between the target login user and each content associated with each point in the metaverse space 40 according to a processing procedure shown in FIG. 17.

In practice, when the relationship strength R between the target login user and each related-person or the relationship strength R between each of the related-persons is given from the operation point related-person calculation unit 2, the data relevance calculation unit 21 starts the data relevance calculation process shown in FIG. 17, and first determines whether the input information INF (FIG. 10) input when the target login user logs in to the metaverse space 40 is to be used when calculating the data relevance P (S20).

The determination is made by determining whether a check mark is set in at least one of the check boxes respectively corresponding to the use purpose related content and the designated construction related content as the content to be displayed (at least one of the use purpose related content and the designated construction related content is designated) in the display content identifying region 55 of the information display field 51 of the information presentation screen 50 described above with reference to FIG. 11. When a negative result is obtained in the determination, the data relevance calculation unit 21 proceeds to step S22.

On the other hand, when the data relevance calculation unit 21 obtains an affirmative result in the determination of step S20, the data relevance calculation unit 21 acquires a purpose of login of the target login user to the metaverse space 40 this time and a related construction content from the input information INF, and calculates a data similarity $\alpha$ between the acquired information and the metadata of each content (S21). The "metadata of the content" here refers to a data outline of the content stored in the data outline field 34E of the record corresponding to the content among the records of FIG. 8.

Therefore, the data relevance calculation unit 21 calculates, for each content data, the similarity between a text representing a data outline of a content stored in the data outline field 34E of the record corresponding to the content data in the management information table 34 and a text of the input information INF as the data similarity $\alpha$ by using an existing calculation method such as cosine similarity.

Subsequently, the data relevance calculation unit 21 determines whether to use the operation history information registered in the operation history table 31 (FIG. 5) when calculating the data relevance P (S22).

In the case of the present embodiment, whether to use the operation history information for calculating the data relevance P is set in advance. Therefore, the determination is made by determining whether the setting that the operation history information is to be used for the calculation of the data relevance P is made in step S22.

Further, when a negative result is obtained in the determination, the data relevance calculation unit 21 proceeds to step S24. When the data relevance calculation unit 21 obtains an affirmative result in the determination of step S22, the data relevance calculation unit 21 executes a weight/data similarity $\beta$ calculation process of calculating at least one of the weight W and a data similarity $\beta$ (S23).

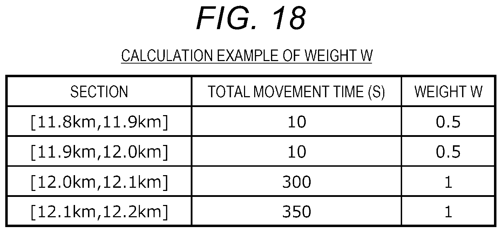

The "weight W" here represents, for example, as shown in FIG. 18, a degree of importance of a section calculated for each section of a certain distance (for example, 100 m) in a range in which the target login user moves so far in the metaverse space 40. As will be described later, the weight W for each section is calculated based on an accumulated time during which the target login user stays in the section.

The "data similarity $\beta$" here represents a degree of similarity between the contents of the content selected (browsed) by the target login user so far or registered by the target login user and the content registered in association with each point of the metaverse space 40 among the contents registered in association with each point of the metaverse space 40. The data similarity $\beta$ is calculated for each content registered in association with each point in the metaverse space 40. Details of the data similarity $\beta$ will be described later.

Next, when calculating the data relevance P, the data relevance calculation unit 21 determines whether to use information of an access history of the related-person for each content registered in association with each point of the metaverse space 40 (S24).

In the case of the present embodiment, whether to use the information of the access history of the related-person for calculating the data relevance P is set in advance. Therefore, the determination is made by determining whether the setting that the information of the access history of the related-person is to be used for the calculation of the data relevance P is made in step S24.

Further, when the data relevance calculation unit 21 obtains a negative result in the determination, the data relevance calculation unit 21 acquires, for each content registered in association with each point of the metaverse space 40, and from the management information table 34 (FIG. 8), the related-person ID of the related-person who registers the content as the related-person information of the content (S25).

On the other hand, when the data relevance calculation unit 21 obtains an affirmative result in the determination of step S24, the data relevance calculation unit 21 acquires, for each content registered in association with each point of the metaverse space 40, and from the management information table 34, a related-person ID of a related-person who accesses the content most frequently (hereinafter, referred to as a most accessible person) as the related-person information of the content (S26).

However, in step S26, not only the related-person ID of the most accessible person but also the related-person IDs of the related-persons of the top several persons having the large number of accesses may be acquired from the management information table 34 as the related-person information of the content. In addition, the weight may be set for the related-person, and the related-person whose related-person ID is to be acquired may be selected based on the number of accesses of the related-person and the weight of the related-person.

Thereafter, the data relevance calculation unit 21 calculates, for each content, the data relevance P, which is the relevance between the content and the target login user, based on the weight W for each section in which the target login user moves in the metaverse space 40, the data similarity $\alpha$ and the data similarity $\beta$ for each content, and the relationship strength $\alpha$ for each related-person calculated by the operation point related-person calculation unit 20, which are acquired as described above (S27).

Specifically, the data relevance calculation unit 21 calculates the data relevance by the following method for each content registered in the management information table 34.

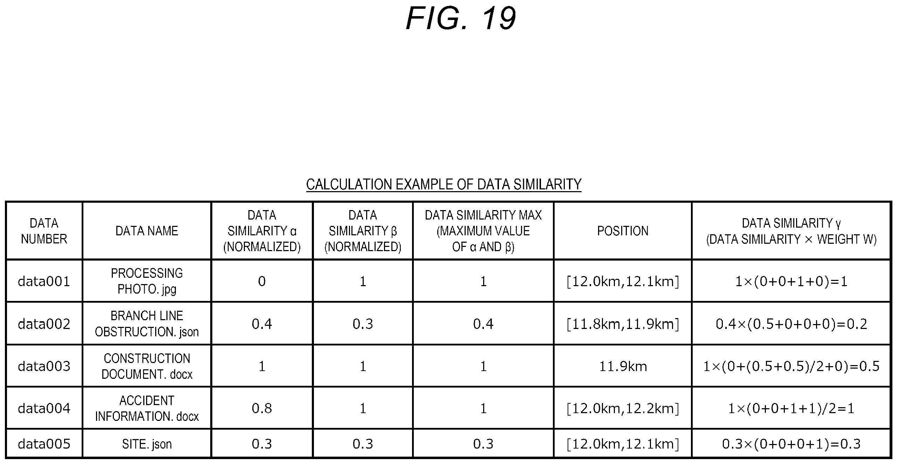

First, as shown in FIG. 19, the data relevance calculation unit 21 compares, for each content, the data similarity $\alpha$ calculated in step S21 normalized in the range of "0" to "1" with the data similarity $\beta$ calculated in step S23 normalized in the range of "0" to "1", and sets the larger one as data similarity MAX of the content.

Next, for each content, the data relevance calculation unit 21 calculates, based on the position in the metaverse space 40 with which the content is associated and the weight W of each section in the metaverse space 40 calculated in step S23, a data similarity γ, which is a degree of similarity between the content and the input information INF, taking into account the position in the metaverse space 40 with which the content is associated, using the following formula:

$$\text{DATA SIMILARITY } \gamma = \text{DATA SIMILARITY MAX} \times \sum (\text{WEIGHT W OF SECTION WITH WHICH CONTENT IS ASSOCIATED})$$
$$\cdots\cdots (1)$$

In Formula (1), the weight W is set to "0" for a section other than the "section associated with the content".
For example, in the example of FIG. 19, the content of "construction photo.jpg" whose data number is "data001" has the data similarity MAX of "1", and according to the management information table 34 (FIG. 8), the content is associated with the section of "[12.0 km, 12.1 km]" in the metaverse space 40. Referring to FIG. 18, the weight W of the section is "1". Therefore, the data relevance calculation unit calculates the data similarity γ of the content as shown in the following formula:

$$1 \times (0 + 0 + 1 + 0) = 1 \qquad\qquad \cdots\cdots (2)$$

At this time, when the content is associated with a boundary between the two sections, the data relevance calculation unit 21 sets an average value of the weights W of the sections on both sides adjacent to the boundary as the "weight W of the section associated with the content".
For example, as shown in FIG. 19, the content of "construction document.docx" whose data number is "data003" has the data similarity MAX of "1", and according to the management information table 34, the content is associated with the position of "11.9 km" which is the boundary between a section of [11.8 km, 11.9 km] and a section of [11.9 km, 12.0 km] in the metaverse space. Referring to FIG. 18, the weights W of these two sections are both "0.5". Therefore, the data relevance calculation unit 21 calculates the data similarity γ of the content as in the following formula:

$$1 \times (0 + (0.5 + 0.5)/2 + 0) = 0.5 \qquad\qquad \cdots\cdots (3)$$

Further, when the content is associated with a range including two or more sections, the data relevance calculation unit 21 sets the average value of the weights W of these sections as the "weight W of the section associated with the content".
For example, as shown in FIG. 19, a content "accident information.docx" whose data number is "data004" has a data similarity MAX of "1", and according to the management information table 34, the content is associated with a range of [12.0 km, 12.2 km] in the metaverse space 40, that is, both a section of [12.0 km, 12.1 km] and a section of [12.1 km, 12.2 km] in the metaverse space 40. Referring to FIG. 18, the weights W of these two sections are both "1". Therefore, the data relevance calculation unit calculates the data similarity γ of the content as in the following formula:

$$1 \times (0 + 0 + 1 + 1)/2 = 1 \qquad\qquad \cdots\cdots (4)$$

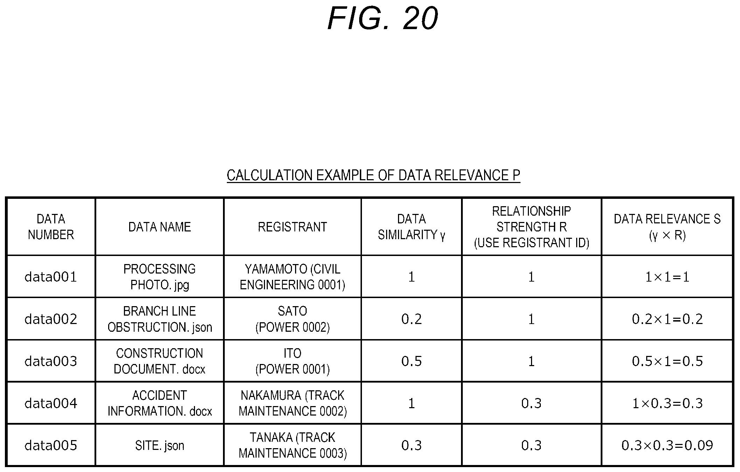

Then, as shown in FIG. 20, for each content, the data relevance calculation unit 21 calculates the data relevance P of the content by multiplying the data similarity γ of the content calculated as described above by the relationship strength R between the content and the target login user notified from the operation point related-person calculation unit 20 (S27). However, as a calculation method of the data relevance P, various other methods can be widely applied.
Further, the data relevance calculation unit 21 outputs the data relevance P for each content calculated in this way to the data acquisition unit 22 (FIG. 1) (S28), and then ends the data relevance calculation process.
In the above-described data relevance calculation process, when negative results are obtained in both step S20 and step S22, none of the data similarity α, the data similarity β, and the weight W of each section is calculated, and thus the data relevance P cannot be calculated by the above-described method. Therefore, in such a case, the data relevance calculation unit 21 outputs the relationship strength R calculated for each content by the operation point related-person calculation unit 20 to the data acquisition unit 22 as the data relevance P of the content.
When the data relevance calculation unit 21 calculates only the weight W for each section in the metaverse space 40 in step S23, the data relevance calculation unit 21 calculates a data relevance S by weighting the relationship strength R for each section as in the case of calculating the data similarity γ.
Next, specific processing contents of the above-described weight/data similarity β calculation process executed by the data relevance calculation unit 21 in step S23 of the above-described data relevance calculation process will be described.

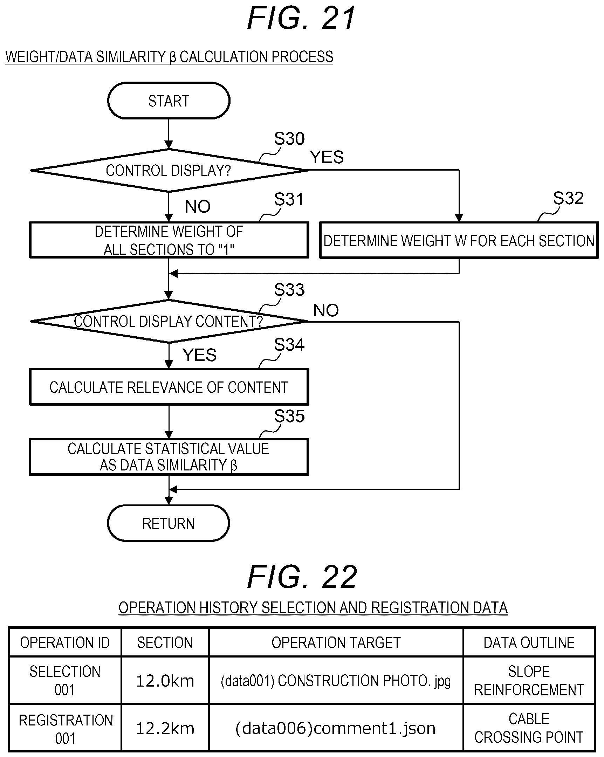

FIG. 21 shows specific processing contents of the weight/data similarity β calculation process. When the process proceeds to step S23 of the data relevance calculation process, the data relevance calculation unit 21 starts the weight/data similarity β calculation process shown in FIG. 21.

Then, the data relevance calculation 21 first determines the weight W of each section in the metaverse space 40 for the target login user in step S30 to step S32. In the following description, it is assumed that each section in the metaverse space 40 is a section every 100 m from the reference position.

Specifically, the data relevance calculation unit 21 determines whether to determine the weight W of each section by using the movement information of the target login user, that is, the point information stored in the point information field 33F of the record in which the point feature stored in the point feature field 33E is "(space movement)" among the records of the communication history table 33 (FIG. 7) (S30).

In the case of the present embodiment, whether to use the movement information of the target login user to determine the weight W of each section is set in advance. Therefore, the determination is made by determining whether the setting that the movement information of the target login user is to be used for the determination of the weight W of each section is made in step S30.

Further, when the data relevance calculation unit 21 obtains a negative result in the determination, the data relevance calculation unit 21 determines the weights W of all the sections within the movement range of the target login user in the metaverse space 40 to be "1" (S31). For example, when the movement range of the target login user is 11.8 km to 12.2 km, all the weights W of the section of 11.8 km to 11.9 km, the section of 11.9 km to 12.0 km, the section of 12.0 km to 12.1 km, and the section of 12.1 km to 12.2 km are set to "1".

When the data relevance calculation unit 21 obtains an affirmative result in the determination of step S30, the data relevance calculation unit 21 determines the weight W of each of the sections based on a stay time of the target login user in each section within the movement range of the target login user in the metaverse space 40 (S32).

Specifically, for example, as shown in FIG. 18, the data relevance calculation unit 21 calculates, for each section in the metaverse space 40, a total value (a "total movement time" in FIG. 18) of the time during which the target login user stays in the section, and sets the weight W of the section in which the calculated total value is larger than a preset threshold to a first value and the weight W of the section in which the calculated total value is equal to or smaller than the preset threshold to a second value. FIG. 18 shows an example in which the threshold is "100", the first value is "1", and the second value is "0.5".

Next, in step S33 to step S35, the data relevance calculation unit 21 determines a content to be displayed in the metaverse space 40 at that time from the contents registered in association with each point in the metaverse space 40.

In practice, when determining the content to be displayed in the metaverse space 40, the data relevance calculation unit 21 determines whether to use the operation history stored in the operation history table 31 (FIG. 5) corresponding to the target login user (S33).

In the present embodiment, whether to use the operation history when determining the content to be displayed in the metaverse space 40 is set in advance. Therefore, the determination is made by determining whether a setting indicating that the operation history is to be used when determining the content to be displayed in the metaverse space 40 is made. Further, when the data relevance calculation unit 21 obtains an affirmative result in the determination, the data relevance calculation unit 21 ends the weight/data similarity β calculation process and returns to the data relevance calculation process in FIG. 17.

On the other hand, when the data relevance calculation unit 21 obtains an affirmative result in the determination of step S33, the data relevance calculation unit 21 calculates a relevance between the content selected (browsed) by the target login user so far or registered by the target login user and each content registered in association with each point of the metaverse space 40 (S34).

Here, as shown in FIG. 22, it is assumed that the target login user selects (browses) the content of the data number "data001", the data name "construction photo.jpg", and the data outline "slope reinforcement" associated with the section of "12.0 km" so far, and registers the content of the data number "data006", the data name "comment1.json", and the data outline "cable crossing location" in association with the position of "12.2 km" in the metaverse space (see FIG. 5).

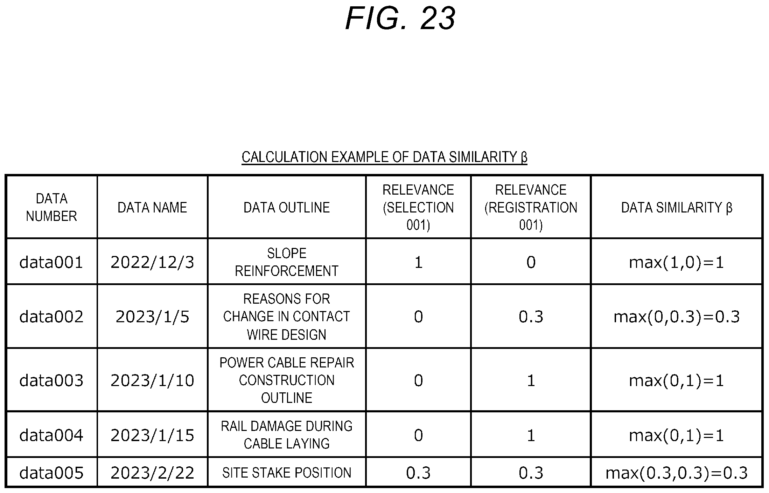

In this case, first, as shown in the column of "relevance (selection 001)" in FIG. 23, the data relevance calculation unit 21 calculates the relevance between the content (hereinafter, referred to as a selected content) selected (browsed) by the target login user so far and each content (including the selected content) registered in association with each point of the metaverse space 40. In the example of FIG. 22, the content "(data001) construction photo.jpg" corresponds to the selected content.

As a calculation method of the relevance, various existing calculation methods can be applied. In the case of the present embodiment, based on the text of the data outline stored in the data outline field 34E of the management information table 34 (FIG. 8), the data relevance calculation unit 21 calculates the cosine similarity between the data outline of the selected content and the data outline of the target content as the relevance.

When there are a plurality of selected contents, the data relevance calculation unit 21 calculates, for each selected content, the relevance to each content registered in association with each point in the metaverse space 40. Therefore, in this case, columns of "selection 002", "selection 003", and so on corresponding to these contents are added to the table of FIG. 23.

Next, as shown in the column of "relevance (registration 001)" in FIG. 23, the data relevance calculation unit 21 calculates the relevance between a content (hereinafter, referred to as a registration content) that is registered by the target login user in association with any point in the metaverse space 40 so far and each content (including the registration content) registered in association with each point in the metaverse space. In the example of FIG. 22, the content "(data006) comment1.json" corresponds to the registration content.

As a calculation method of the relevance, various existing calculation methods can be applied. In the case of the present embodiment, based on the text of the data outline stored in the data outline field 34E of the management information table 34, the data relevance calculation unit 21 calculates the cosine similarity between the data outline of the registration content and the data outline of the target content as the relevance. As a calculation method of the relevance, a calculation method other than the cosine similarity may be used.

When there are a plurality of registration contents, the data relevance calculation unit 21 calculates, for each registration content, the relevance to each content registered in association with each point in the metaverse space 40. Therefore, in this case, columns such as "registration 002", "registration 003", and so on corresponding to these contents are added to the table of FIG. 23.

Subsequently, as shown in FIG. 23, for each content registered in the management information table 34, the data relevance calculation unit 21 calculates, as the data similarity $\beta$ of the content, the highest relevance between the relevance with the selected content calculated for the content (each selected content when there are a plurality of selected contents) and the relevance with the registration content calculated for the content (each registration content when there are a plurality of registration contents) (S35).

However, a value obtained by converting an average value of relevance, the highest relevance, or the average value of relevance using a predefined function may be used as the data similarity $\beta$ of the content. In addition, the relevance of each content may be weighted according to the operation content such as the selection (browsing) and the registration.

Then, the data relevance calculation unit 21 ends the weight/data similarity $\beta$ calculation process and returns to the data relevance calculation process in FIG. 17.

(3-3) Data Acquisition Process

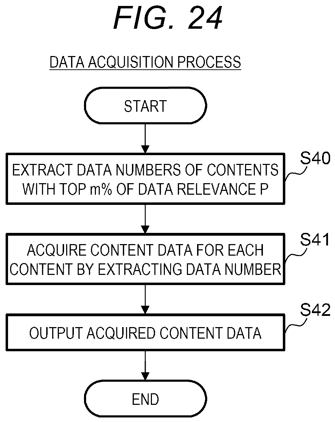

FIG. 24 shows specific processing contents of the data acquisition process executed by the data acquisition unit 22 (FIG. 1) after the process from the data relevance calculation unit 21 ends. Based on the data relevance P of each content calculated by the data relevance calculation unit 21, the data acquisition unit 22 acquires, according to the processing procedure shown in FIG. 24, content data of each content to be displayed in the metaverse space 40 at that time.

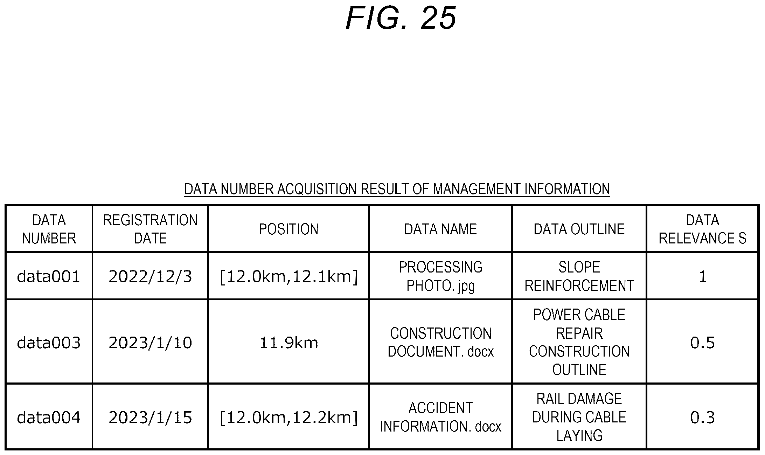

In practice, when the data relevance P for each content is given from the data relevance calculation unit 21, the data acquisition unit 22 starts the data acquisition process shown in FIG. 24, and first extracts all the data numbers of the contents having the top m% or more of the data relevance P from the contents registered in the management information table 34 (S40). In this case, "m" is a predetermined threshold. FIG. 25 shows an example in which the data relevance P of each content is as shown in FIG. 20 and "m" is "60".

However, in step S40, a top predetermined number of data numbers having the data relevance P may be extracted. A data number in which a magnitude of the data relevance P is equal to or greater than a predetermined threshold may be extracted.

Subsequently, the data acquisition unit 22 acquires, from the content data table 35 (FIG. 1), the content data of the content of each data number extracted in step S40 (S41). The data acquisition unit 22 outputs the acquired content data to the display device 7 (FIG. 1) via the output unit 13B (FIGS. 1 and 2) together with image data of a VR image of the metaverse space 40 at the point where the target login user logs in (S42). Then, the data acquisition unit 22 ends the data acquisition process.

As a result, based on the content data and the image data of the VR image, the information presentation screen 50 (FIG. 11) on which only the icons 71 (FIG. 11) of the content related to the target login user at that time are displayed is displayed on the display device 7.

(4) Effects of Present Embodiment

As described above, the information presentation device 5 according to the present embodiment calculates, for each of other related-persons, the relationship strength R between the target login user and the corresponding related-person at a point or a range in which the target login user performed an operation in the metaverse space 40 in the past, based on history information of communication performed between the target login user and the other related-persons; calculates, for each of the contents which are registered in association with each of the points in the metaverse space 40, the data relevance P between the corresponding content and the target login user, based on the calculated relationship strength R; and acquires content data of a top predetermined number of contents having the calculated data relevance P for each content, and selectively presents the content whose content data is acquired to the target login user in the metaverse space 40.

Therefore, according to the information presentation device 5, it is possible to selectively present, in the metaverse space 40, only the content having a high relevance with the target login user at the point where the target login user is positioned in the metaverse space 40. As a result, according to the present information presentation device 5, it is possible to eliminate a task of the target login user extracting necessary content from a content unrelated to the target login user, and to reduce the risk that the target login user overlooks an important content.

(5) Other Embodiments

In the above-described embodiment, a case is described in which the information presentation device 5 performs construction by one computer device, and the invention is not limited thereto, and the information presentation device 5 may be implemented by a plurality of computer devices implementing a distributed computing system.

In the above embodiment, the content is displayed on a screen for the target login user. However, the invention is not limited thereto, and for example, the content may be output by voice.

Industrial Applicability

The invention can be widely applied to an information presentation device having various configurations for presenting a content to a user in a virtual space.

**Claims**

1. An information presentation device that presents contents registered in association with each of points in a virtual space to a user who logs in to the virtual space, the information presentation device comprising:

   a relationship strength calculation unit configured to calculate, for each of other related-persons, a relationship strength between the user and the corresponding related-person at a point or a range in which the user performed an operation in the virtual space in the past, based on history information of communication performed between the user and the other related-persons;
   a relevance calculation unit configured to calculate, for each of the contents which are registered in association with each of the points in the virtual space, a relevance between the corresponding content and the user, based on the calculated relationship strength; and
   a content acquisition unit configured to acquire, based on the calculated relevance for each of the contents, a top predetermined number or a top predetermined proportion of the contents having the high relevance, and selectively present the acquired contents to the user in the virtual space.

2. The information presentation device according to claim 1, wherein

   the relationship strength calculation unit
   determines an extraction range of the history information of the communication based on movement history information representing a movement history of the user in the virtual space, and calculates the relationship strength based on the history information of the communication within the determined extraction range.

3. The information presentation device according to claim 2, wherein
   the relevance calculation unit calculates the relevance of the content based on the relationship strength of the other related-person who registers the content or the relationship strength of a representative user of the content among the other related-persons.

4. The information presentation device according to claim 3, wherein

   the relevance calculation unit
   calculates the relevance of each of the contents by correcting, based on an extraction condition of the corresponding content input by the user and metadata including an outline of each of the contents, the relationship strength of the other related-person who registers the content or the relationship strength of the related-person who is the representative user of the content.

5. The information presentation device according to claim 1, wherein

the relationship strength calculation unit
extracts a feature for identifying a point in the virtual space related to the communication included in the history information of the communication,
identifies a position in the virtual space related to the communication based on the extracted feature, and
adds position information of the identified position to the history information of the communication.

6. The information presentation device according to claim 1, wherein

the relationship strength calculation unit
calculates the relationship strength between the related-persons by network analysis based on the history information of the communication of all the related-persons including the user.

7. The information presentation device according to claim 1, wherein

the relationship strength calculation unit
generates an answer to a question from the user who logs in to the virtual space based on details of each of the registered contents, and presents the answer to the user.

8. An information presentation method to be performed by an information presentation device that presents contents registered in association with each of points in a virtual space to a user who logs in to the virtual space, the method comprising:

a first step of calculating, for each of other related-persons, a relationship strength between the user and the corresponding related-person at a point or a range in which the user performed an operation in the virtual space in the past, based on history information of communication performed between the user and the other related-persons;
a second step of calculating, for each of the contents which are registered in association with each of the points in the virtual space, a relevance between the corresponding content and the user, based on the calculated relationship strength; and
a third step of acquiring, based on the calculated relevance for each of the contents, a top predetermined number or a top predetermined proportion of the contents having the high relevance, and selectively presenting the acquired contents to the user in the virtual space.

9. The information presentation method according to claim 8, wherein
in the first step, the information presentation device determines an extraction range of the history information of the communication based on movement history information representing a movement history of the user in the virtual space, and calculates the relationship strength based on the history information of the communication within the determined extraction range.

10. The information presentation method according to claim 9, wherein

in the second step, the information presentation device
calculates the relevance of the content based on the relationship strength of the other related-person who registers the content or the relationship strength of a representative user of the content among the other related-persons.

11. The information presentation method according to claim 10, wherein

in the third step, the information presentation device
calculates the relevance of each of the contents by correcting, based on an extraction condition of the corresponding content input by the user and metadata including an outline of each of the contents, the relationship strength of the other related-person who registers the content or the relationship strength of the related-person who is the representative user of the content.

12. The information presentation method according to claim 8, wherein

in the first step, the information presentation device extracts a feature for identifying a point in the virtual space related to the communication included in the history information of the communication,

identifies a position in the virtual space related to the communication based on the extracted feature, and adds position information of the identified position to the history information of the communication.

13. The information presentation method according to claim 8, wherein

in the first step, the information presentation device calculates the relationship strength between the related-persons by network analysis based on the history information of the communication of all the related-persons including the user.

14. The information presentation method according to claim 8, wherein

in any of the first step to the third step, the information presentation device generates an answer to a question from the user who logs in to the virtual space based on details of each of the registered contents, and presents the answer to the user.

# FIG. 1

INFORMATION PRESENTATION DEVICE — 5, 11

**14** I/F

**10** CPU

**MAIN STORAGE DEVICE** — 19
RELATED DATA EXTRACTION PROGRAM
- OPERATION POINT RELATED-PERSON CALCULATION UNIT — 20
- DATA RELEVANCE CALCULATION UNIT — 21
- DATA ACQUISITION UNIT — 22

**12** AUXILIARY STORAGE DEVICE
- **23** USER INFORMATION DB
  - LOGIN INFORMATION — 30
  - OPERATION HISTORY — 31
- **24** RELATED-PERSON INFORMATION DB
  - ATTRIBUTE INFORMATION — 32
  - COMMUNICATION HISTORY — 33
- **25** REGISTRATION INFORMATION DB
  - MANAGEMENT INFORMATION — 34
  - CONTENT DATA — 35
  - POINT-RELATED INFORMATION — 36

INPUT AND OUTPUT UNIT — 13
- INPUT UNIT — 13A
- OUTPUT UNIT — 13B

**2**
**3** EXTERNAL SERVER
**4** EXTERNAL SYSTEM
**7** DISPLAY DEVICE
**6** INPUT DEVICE
**1**

## FIG. 2

40

data003

CONSTRUCTION
DOCUMENT
ITO (POWER
DEPARTMENT)

data001

CONSTRUCTION
PHOTO
YAMAMOTO (CIVIL
ENGINEERING
DEPARTMENT)

data005

| SITE |

THERE ARE SITE STAKES,
PLEASE BE CAREFUL NOT
TO EXCEED SITE LIMITS

TANAKA (TRACK
MAINTENANCE
DEPARTMENT)

data004

ACCIDENT
INFORMATION
NAKAMURA (TRACK
MAINTENANCE
DEPARTMENT)

data002

| BRANCH LINE OBSTRUCTION |

CHANGE IN BRANCH LINE POSITION
DUE TO BURIED OBJECTS
BURIED CABLE (INSIDE TROUGH)
FOR MORE DETAILS, PLEASE SEE Link.

SATO (POWER
DEPARTMENT)

12.200km

12.000km

41

11.800km

## FIG. 3

# FIG. 4

LOGIN INFORMATION TABLE 30

| USER ID | LOGIN POSITION |
|---|---|
| POWER 0001 | 11.8km |
| · · · | · · · |

30A      30B

# FIG. 5

OPERATION HISTORY TABLE 31

| HISTORY NUMBER | OPERATION TIME [S] | OPERATION POSITION | OPERATION TARGET | OPERATION CONTENT |
|---|---|---|---|---|
| 1 | 10 | [11.8km,12.0km] | — | MOVE |
| 2 | 30 | 12.0km | (data001) PROCESSING PHOTO. jpg | BROWSE |
| 3 | 300 | [12.0km,12.2km] | — | MOVE |
| 4 | 100 | 12.2km | (data006)comment1.json | ADDITIONAL REGISTRATION |
| 5 | 50 | [12.2km,12.1km] | — | MOVE |

31A    31B      31C        31D        31E

# FIG. 6

ATTRIBUTE INFORMATION TABLE 32

| RELATED-PERSON ID | NAME | BELONGING DEPARTMENT |
|---|---|---|
| POWER 0001 | ITO | POWER DEPARTMENT |
| POWER 0002 | SATO | POWER DEPARTMENT |
| POWER 0003 | SUZUKI | POWER DEPARTMENT |
| TRACK MAINTENANCE 0001 | WATANABE | TRACK MAINTENANCE DEPARTMENT |
| TRACK MAINTENANCE 0002 | NAKAMURA | TRACK MAINTENANCE DEPARTMENT |
| TRACK MAINTENANCE 0003 | TANAKA | TRACK MAINTENANCE DEPARTMENT |
| CIVIL ENGINEERING 0001 | YAMAMOTO | CIVIL ENGINEERING DEPARTMENT |
| . . . | . . . | . . . |

32A          32B          32C

# FIG. 7

COMMUNICATION HISTORY TABLE 33

| NUMBER | DATE AND TIME | DEVICE | DATA ACQUISITION MODE | POINT FEATURE | POINT INFORMATION | CORRESPONDING PERSON | COMMUNICATION TIME |
|---|---|---|---|---|---|---|---|
| 1 | 2022/12/3 | METAVERSE | CONVERSATION | (SPACE MOVEMENT) | 11.8-12.4km | ITO (POWER 0001), NAKAMURA (TRACK MAINTENANCE 0002), WATANABE (TRACK MAINTENANCE 0001), YAMAMOTO (CIVIL ENGINEERING 0001) | 10 MINS |
| 2 | 2022/12/3 | PC | ONLINE CONFERENCE | – | ALL | ITO (POWER 0001), WATANABE (TRACK MAINTENANCE 0001) | 30 MINS |
| 3 | 2023/1/5 | PC | ONLINE CONFERENCE | CONVERSATION LOG (A STATION ELECTRIC POWER SWITCHING CONSTRUCTION (No. 23-0318)) | (11.8-12.4km) | ITO (POWER 0001), SATO (POWER 0002) | 50 MINS |
| 4 | 2023/1/5 | PC | CHAT | – | ALL | SUZUKI (POWER 0003), NAKAMURA (TRACK MAINTENANCE 0002) | 10 MINS |
| 5 | 2023/1/10 | METAVERSE | CONVERSATION | (SPACE MOVEMENT) | 12.0-12.2km | SUZUKI (POWER 0003), WATANABE (TRACK MAINTENANCE 0001) | 20 MINS |
| 6 | 2023/1/10 | PC | ONLINE CONFERENCE | A STATION | 12.0-12.2km | NAKAMURA (TRACK MAINTENANCE 0002), YAMAMOTO (CIVIL ENGINEERING 0001) | 40 MINS |
| 7 | 2023/1/10 | PC | E-MAIL | A STATION | 12.0-12.2km | WATANABE (TRACK MAINTENANCE 0001), YAMAMOTO (CIVIL ENGINEERING 0001) | 5 MINS |
| 8 | 2023/1/10 | smart phone | CHAT | A STATION | 12.0-12.2km | YAMAMOTO (CIVIL ENGINEERING 0001), SATO (POWER 0002) | 10 MINS |
| 9 | 2023/1/15 | METAVERSE | CONVERSATION | (SPACE MOVEMENT) | 11.8-12.2km | ITO (POWER 0001), NAKAMURA (TRACK MAINTENANCE 0002), TANAKA (TRACK MAINTENANCE 0001) | 10 MINS |
| 10 | 2023/1/15 | PC | ONLINE CONFERENCE | MINUTES (B STATION) | (14.0-14.2km) | ITO (POWER 0001), YAMAMOTO (CIVIL ENGINEERING 0001) | 60 MINS |
| 11 | 2023/2/22 | smart phone | CHAT | B STATION | 14.0-14.2km | ITO (POWER 0001), YAMAMOTO (CIVIL ENGINEERING 0001), TANAKA (TRACK MAINTENANCE 0003) | 30 MINS |

33A    33B    33C    33D    33E    33F    33G    33H

EP 4 654 102 A1

# FIG. 8

MANAGEMENT INFORMATION TABLE 34

| DATA NUMBER | REGISTRATION DATE | POSITION | DATA NAME | DATA OUTLINE | REGISTRANT | MOST ACCESSIBLE PERSON |
|---|---|---|---|---|---|---|
| data001 | 2022/12/3 | [12.0km,12.1km] | PROCESSING PHOTO.jpg | SLOPE REINFORCEMENT | YAMAMOTO (CIVIL ENGINEERING 0001) | ITO (POWER 0001) |
| data002 | 2023/1/5 | [11.8km,11.9km] | BRANCH LINE OBSTRUCTION.json | REASONS FOR CHANGE IN CONTACT WIRE DESIGN | SATO (POWER 0002) | SATO (POWER 0002) |
| data003 | 2023/1/10 | 11.9km | CONSTRUCTION DOCUMENT.docx | POWER CABLE REPAIR CONSTRUCTION OUTLINE | ITO (POWER 0001) | SUZUKI (POWER 0003) |
| data004 | 2023/1/15 | [12.0km,12.2km] | ACCIDENT INFORMATION.docx | RAIL DAMAGE DURING CABLE LAYING | NAKAMURA (TRACK MAINTENANCE 0002) | TANAKA (TRACK MAINTENANCE 0003) |
| data005 | 2023/2/22 | [12.0km,12.1km] | SITE.json | SITE STAKE POSITION | TANAKA (TRACK MAINTENANCE 0003) | NAKAMURA (TRACK MAINTENANCE 0002) |
| 34A | 34B | 34C | 34D | 34E | 34F | 34G |

EP 4 654 102 A1

## FIG. 9

## FIG. 10

INPUT INFORMATION INF

| PURPOSE | RELATED CONSTRUCTION CONTENT |
|---|---|
| SECURITY MEETING | CONSTRUCTION NAME: A STATION ELECTRIC POWER SWITCHING CONSTRUCTION<br>CONSTRUCTION PERIOD: 2022/11/22 - 2023/3/15<br>CONSTRUCTION OUTLINE: OUTDOOR POWER CABLE LINE CROSSING POINT SWITCHING CONSTRUCTION |

# FIG. 11

CURRENT TIME: 2023/3/10 19:45

■ LOGIN USER: ITO
■ ATTRIBUTE: POWER DEPARTMENT

■ USE PURPOSE:

SECURITY MEETING

☑ INPUT OF CONSTRUCTION NUMBER

CONSTRUCTION NUMBER    No. 23-0318

CONSTRUCTION NAME: A STATION ELECTRIC POWER SWITCHING CONSTRUCTION
CONSTRUCTION PERIOD: 2022/11/22 - 2023/3/15
CONSTRUCTION OUTLINE: OUTDOOR POWER CABLE LINE CROSSING POINT SWITCHING CONSTRUCTION

DISPLAY RELATED INFORMATION

☑ USE PURPOSE
☑ CONSTRUCTION
☑ ATTRIBUTE-RELATED ○ BELONGING DEPARTMENT
◉ RELATED-PERSON

Q&A

WHAT PRECAUTIONS TO BE TAKEN WHEN CONSTRUCTING IN THIS AREA?
》

data003
CONSTRUCTION DOCUMENT ITO (POWER DEPARTMENT)

data001
CONSTRUCTION PHOTO YAMAMOTO (CIVIL ENGINEERING DEPARTMENT)

data004
ACCIDENT INFORMATION NAKAMURA (TRACK MAINTENANCE DEPARTMENT)

RAIL DAMAGE OCCURRED DURING CABLE LAYING IN THIS AREA, AND IN THE CASE OF CROSSING BY MACHINE, PLEASE GO FROM POINT OF 11.9 km

12.200km

12.000km

11.800km

2022/2/15    2023/3/10
DATA DISPLAY PERIOD

EP 4 654 102 A1

# FIG. 12

OPERATION POINT RELATED-PERSON
CALCULATION PROCESS

START

CALCULATE MINIMUM VALUE x1 AND
MAXIMUM VALUE x2 BASED ON MOVEMENT
INFORMATION OF TARGET LOGIN USER — S1

POINT INFORMATION
ASSIGNED? — S2

YES → POINT INFORMATION
ASSIGNMENT PROCESS — S3

NO

IDENTIFY ALL RECORDS
THAT CONTAIN RANGE x1 TO x2 — S4

CALCULATE RELATIONSHIP VALUE
BETWEEN RELATED-PERSONS — S5

RELATIONSHIP STRENGTH
R CALCULATED? — S6

YES → SET RELATIONSHIP VALUE AS
RELATIONSHIP STRENGTH R — S7

NO

CALCULATE RELATIONSHIP STRENGTH R
BETWEEN LOGIN USER AND ANOTHER
RELATED-PERSON BASED ON
RELATIONSHIP VALUE — S8

RELATIONSHIP STRENGTH R OUTPUT — S9

END

# FIG. 13

CALCULATION EXAMPLE OF RELATIONSHIP VALUE

| NUMBER | RELATED-PERSON 1 | | RELATED-PERSON 2 | | RELATIONSHIP VALUE |
|---|---|---|---|---|---|
| | NAME | AFFILIATION | NAME | AFFILIATION | |
| 1 | ITO | POWER DEPARTMENT | NAKAMURA | TRACK MAINTENANCE DEPARTMENT | 10 |
| 2 | ITO | POWER DEPARTMENT | WATANABE | TRACK MAINTENANCE DEPARTMENT | 40 |
| 3 | ITO | POWER DEPARTMENT | SATO | POWER DEPARTMENT | 50 |
| 4 | ITO | POWER DEPARTMENT | SUZUKI | POWER DEPARTMENT | 5 |
| 5 | SUZUKI | POWER DEPARTMENT | NAKAMURA | TRACK MAINTENANCE DEPARTMENT | 10 |
| 6 | SUZUKI | POWER DEPARTMENT | WATANABE | TRACK MAINTENANCE DEPARTMENT | 20 |
| 7 | YAMAMOTO | CIVIL ENGINEERING DEPARTMENT | NAKAMURA | TRACK MAINTENANCE DEPARTMENT | 50 |
| 8 | YAMAMOTO | CIVIL ENGINEERING DEPARTMENT | WATANABE | TRACK MAINTENANCE DEPARTMENT | 5 |
| 9 | YAMAMOTO | CIVIL ENGINEERING DEPARTMENT | SATO | POWER DEPARTMENT | 20 |
| 10 | YAMAMOTO | CIVIL ENGINEERING DEPARTMENT | TANAKA | TRACK MAINTENANCE DEPARTMENT | 10 |
| 11 | YAMAMOTO | CIVIL ENGINEERING DEPARTMENT | ITO | POWER DEPARTMENT | 10 |

## FIG. 14

CALCULATION EXAMPLE OF RELATED-PERSON NETWORK

## FIG. 15

CALCULATION EXAMPLE OF RELATIONSHIP VALUE

| ID | NAME | BELONGING DEPARTMENT | RELATIONSHIP STRENGTH R |
|---|---|---|---|
| POWER 0001 | ITO | POWER DEPARTMENT | 1 |
| POWER 0002 | SATO | POWER DEPARTMENT | 1 |
| POWER 0003 | SUZUKI | POWER DEPARTMENT | 1 |
| TRACK MAINTENANCE 0001 | WATANABE | TRACK MAINTENANCE DEPARTMENT | 0.3 |
| TRACK MAINTENANCE 0002 | NAKAMURA | TRACK MAINTENANCE DEPARTMENT | 0.3 |
| TRACK MAINTENANCE 0003 | TANAKA | TRACK MAINTENANCE DEPARTMENT | 0.3 |
| CIVIL ENGINEERING 0001 | YAMAMOTO | CIVIL ENGINEERING DEPARTMENT | 1 |

# FIG. 16

POINT INFORMATION ASSIGNMENT PROCESS

START

S10

SELECT ONE TARGET RECORD
THAT IS NOT PROCESSED

S11

EXTRACT FEATURE CAPABLE OF
IDENTIFYING POSITION FROM
COMMUNICATION HISTORY

S12

ACQUIRE POSITION INFORMATION
BASED ON EXTRACTED FEATURE

S13

ASSIGN ACQUIRED POSITION INFORMATION

S14

NO — ALL TARGET RECORDS
COMPLETED?

YES

RETURN

# FIG. 17

DATA RELEVANCE CALCULATION PROCESS

```
                    ┌─────────────┐
                    │    START    │
                    └─────────────┘
                           │
                           ▼                    S20
                    ◇───────────────◇     NO
                    │ USE INPUT INFORMATION? │────────────┐
                    ◇───────────────◇              │
                           │ YES         S21              │
                           ▼                              │
              ┌───────────────────────────┐               │
              │ CALCULATE DATA SIMILARITY α │              │
              └───────────────────────────┘               │
                           │◄─────────────────────────────┘
                           ▼                    S22
                    ◇───────────────◇     NO
                    │ USE OPERATION HISTORY │────────────┐
                    │    INFORMATION?       │              │
                    ◇───────────────◇              │
                           │ YES         S23              │
                           ▼                              │
              ┌───────────────────────────┐               │
              │  WEIGHT/DATA SIMILARITY β   │              │
              │   CALCULATION PROCESS       │              │
              └───────────────────────────┘               │
                           │◄─────────────────────────────┘
                           ▼                    S24
                    ◇───────────────◇     NO
                    │  USE ACCESS HISTORY   │──────────────────────┐
                    │    INFORMATION?       │                       │
                    ◇───────────────◇                        │
                           │ YES    S26                       S25
                           ▼                                    ▼
       ┌───────────────────────────┐       ┌───────────────────────────┐
       │ FOR EACH CONTENT, ACQUIRE │       │ FOR EACH CONTENT, ACQUIRE │
       │ USER ID OF MOST ACCESSIBLE │      │   USER ID OF REGISTRANT    │
       │ PERSON AS RELATED-PERSON  │       │ AS RELATED-PERSON         │
       │ INFORMATION               │       │ INFORMATION               │
       └───────────────────────────┘       └───────────────────────────┘
                           │◄───────────────────────────┘
                           ▼                    S27
              ┌───────────────────────────┐
              │ CALCULATE DATA RELEVANCE P │
              └───────────────────────────┘
                           │                    S28
                           ▼
              ┌───────────────────────────┐
              │  OUTPUT DATA RELEVANCE P   │
              └───────────────────────────┘
                           │
                           ▼
                    ┌─────────────┐
                    │     END     │
                    └─────────────┘
```

# FIG. 18

CALCULATION EXAMPLE OF WEIGHT W

| SECTION | TOTAL MOVEMENT TIME (S) | WEIGHT W |
|---|---|---|
| [11.8km,11.9km] | 10 | 0.5 |
| [11.9km,12.0km] | 10 | 0.5 |
| [12.0km,12.1km] | 300 | 1 |
| [12.1km,12.2km] | 350 | 1 |

# FIG. 19

CALCULATION EXAMPLE OF DATA SIMILARITY

| DATA NUMBER | DATA NAME | DATA SIMILARITY α (NORMALIZED) | DATA SIMILARITY β (NORMALIZED) | DATA SIMILARITY MAX (MAXIMUM VALUE OF α AND β) | POSITION | DATA SIMILARITY γ (DATA SIMILARITY × WEIGHT W) |
|---|---|---|---|---|---|---|
| data001 | PROCESSING PHOTO. jpg | 0 | 1 | 1 | [12.0km,12.1km] | 1×(0+0+1+0)=1 |
| data002 | BRANCH LINE OBSTRUCTION. json | 0.4 | 0.3 | 0.4 | [11.8km,11.9km] | 0.4×(0.5+0+0+0)=0.2 |
| data003 | CONSTRUCTION DOCUMENT. docx | 1 | 1 | 1 | 11.9km | 1×(0+(0.5+0.5)/2+0)=0.5 |
| data004 | ACCIDENT INFORMATION. docx | 0.8 | 1 | 1 | [12.0km,12.2km] | 1×(0+0+1+1)/2=1 |
| data005 | SITE. json | 0.3 | 0.3 | 0.3 | [12.0km,12.1km] | 0.3×(0+0+0+1)=0.3 |

## FIG. 20

CALCULATION EXAMPLE OF DATA RELEVANCE P

| DATA NUMBER | DATA NAME | REGISTRANT | DATA SIMILARITY γ | RELATIONSHIP STRENGTH R (USE REGISTRANT ID) | DATA RELEVANCE S (γ × R) |
|---|---|---|---|---|---|
| data001 | PROCESSING PHOTO. jpg | YAMAMOTO (CIVIL ENGINEERING 0001) | 1 | 1 | 1×1=1 |
| data002 | BRANCH LINE OBSTRUCTION. json | SATO (POWER 0002) | 0.2 | 1 | 0.2×1=0.2 |
| data003 | CONSTRUCTION DOCUMENT. docx | ITO (POWER 0001) | 0.5 | 1 | 0.5×1=0.5 |
| data004 | ACCIDENT INFORMATION. docx | NAKAMURA (TRACK MAINTENANCE 0002) | 1 | 0.3 | 1×0.3=0.3 |
| data005 | SITE. json | TANAKA (TRACK MAINTENANCE 0003) | 0.3 | 0.3 | 0.3×0.3=0.09 |

## FIG. 21

WEIGHT/DATA SIMILARITY β CALCULATION PROCESS

```
           ( START )
               │
               ▼
        ┌──────────────┐  S30
   ─────< CONTROL DISPLAY? >───── YES ──────────┐
   │    └──────────────┘                        │
   │         │ NO    S31                         │ S32
   ▼                                             ▼
┌──────────────────────┐            ┌─────────────────────────────────┐
│ DETERMINE WEIGHT OF  │            │ DETERMINE WEIGHT W FOR EACH SECTION │
│ ALL SECTIONS TO "1"  │            └─────────────────────────────────┘
└──────────────────────┘                         │
           │◄────────────────────────────────────┘
           ▼
        ┌──────────────────────────┐  S33
   ─────< CONTROL DISPLAY CONTENT? >───── NO ──────┐
        └──────────────────────────┘               │
           │ YES    S34                             │
           ▼                                        │
┌──────────────────────────────┐                    │
│ CALCULATE RELEVANCE OF CONTENT │                   │
└──────────────────────────────┘                    │
           │ S35                                     │
           ▼                                         │
┌──────────────────────────────┐                    │
│ CALCULATE STATISTICAL VALUE   │                    │
│ AS DATA SIMILARITY β          │                    │
└──────────────────────────────┘                    │
           │◄───────────────────────────────────────┘
           ▼
        ( RETURN )
```

## FIG. 22

OPERATION HISTORY SELECTION AND REGISTRATION DATA

| OPERATION ID | SECTION | OPERATION TARGET | DATA OUTLINE |
|---|---|---|---|
| SELECTION 001 | 12.0km | (data001) CONSTRUCTION PHOTO. jpg | SLOPE REINFORCEMENT |
| REGISTRATION 001 | 12.2km | (data006)comment1.json | CABLE CROSSING POINT |

# FIG. 23

CALCULATION EXAMPLE OF DATA SIMILARITY β

| DATA NUMBER | DATA NAME | DATA OUTLINE | RELEVANCE (SELECTION 001) | RELEVANCE (REGISTRATION 001) | DATA SIMILARITY β |
|---|---|---|---|---|---|
| data001 | 2022/12/3 | SLOPE REINFORCEMENT | 1 | 0 | max(1,0)=1 |
| data002 | 2023/1/5 | REASONS FOR CHANGE IN CONTACT WIRE DESIGN | 0 | 0.3 | max(0,0.3)=0.3 |
| data003 | 2023/1/10 | POWER CABLE REPAIR CONSTRUCTION OUTLINE | 0 | 1 | max(0,1)=1 |
| data004 | 2023/1/15 | RAIL DAMAGE DURING CABLE LAYING | 0 | 1 | max(0,1)=1 |
| data005 | 2023/2/22 | SITE STAKE POSITION | 0.3 | 0.3 | max(0.3,0.3)=0.3 |

# FIG. 24

DATA ACQUISITION PROCESS

START

EXTRACT DATA NUMBERS OF CONTENTS WITH TOP m% OF DATA RELEVANCE P — S40

ACQUIRE CONTENT DATA FOR EACH CONTENT BY EXTRACTING DATA NUMBER — S41

OUTPUT ACQUIRED CONTENT DATA — S42

END

EP 4 654 102 A1

# FIG. 25

DATA NUMBER ACQUISITION RESULT OF MANAGEMENT INFORMATION

| DATA NUMBER | REGISTRATION DATE | POSITION | DATA NAME | DATA OUTLINE | DATA RELEVANCE S |
|---|---|---|---|---|---|
| data001 | 2022/12/3 | [12.0km,12.1km] | PROCESSING PHOTO. jpg | SLOPE REINFORCEMENT | 1 |
| data003 | 2023/1/10 | 11.9km | CONSTRUCTION DOCUMENT. docx | POWER CABLE REPAIR CONSTRUCTION OUTLINE | 0.5 |
| data004 | 2023/1/15 | [12.0km,12.2km] | ACCIDENT INFORMATION. docx | RAIL DAMAGE DURING CABLE LAYING | 0.3 |

Europäisches
Patentamt

European
Patent Office

Office européen
des brevets

## EUROPEAN SEARCH REPORT

**Application Number**

EP 25 16 3635

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 445723 B1 (COLOPL INC) 7 March 2024 (2024-03-07) * paragraphs [0146], [0151] - [0155], [0160], [0168], [0234] - [0236] * | 1-14 | INV. G06Q10/0631 G06Q10/20 G06Q50/08 |
| A | CN 115 374 412 A (CHINA ACADEMY RAILWAY SCIENCES CORP LTD ET AL.) 22 November 2022 (2022-11-22) * paragraphs [0004], [0061] * | 1-14 | |
| A | US 2023/162736 A1 (JO GEUN SIK [KR] ET AL) 25 May 2023 (2023-05-25) * paragraph [0051] * | 1-14 | |
| | | | **TECHNICAL FIELDS SEARCHED (IPC)** |
| | | | G06Q |

The present search report has been drawn up for all claims

| Place of search | Date of completion of the search | Examiner |
|---|---|---|
| Munich | 6 August 2025 | Breidenich, Markus |

## ANNEX TO THE EUROPEAN SEARCH REPORT
## ON EUROPEAN PATENT APPLICATION NO.

EP 25 16 3635

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | | Publication date | Patent family member(s) | | Publication date |
|---|---|---|---|---|---|
| JP 7445723 | B1 | 07-03-2024 | JP | 7445723 B1 | 07-03-2024 |
| | | | JP | 2024049926 A | 10-04-2024 |
| CN 115374412 | A | 22-11-2022 | NONE | | |
| US 2023162736 | A1 | 25-05-2023 | JP | 7350376 B2 | 26-09-2023 |
| | | | JP | 2023077365 A | 05-06-2023 |
| | | | KR | 102465228 B1 | 09-11-2022 |
| | | | US | 2023162736 A1 | 25-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008052665 A